# EUROPEAN PATENT SPECIFICATION

(11) **EP 1 427 043 B1**
(45) Date of publication and mention of the grant of the patent: **14.12.2011**
(21) Application number: 02760815.7
(22) Date of filing: 09.09.2002
(51) Int. Cl.: H01M 8/02, H01M 8/10

(54) **MEMBRANE, ELECTRODE ASSEMBLY, ITS MANUFACTURING METHOD, AND SOLID POLYER FUEL CELL USING THE SAME**
MEMBRAN-ELEKTRODENBAUGRUPPE, VERFAHREN ZU IHRER HERSTELLUNG UND FESTPOLYMER-BRENNSTOFFZELLE DAMIT
ENSEMBLE MEMBRANE-ELECTRODE, SON PROCEDE DE PRODUCTION, ET PILE A COMBUSTIBLE A POLYMERE SOLIDE LA COMPORTANT

(30) Priority: 11.09.2001 JP 2001275259; 27.09.2001 JP 2001298030; 28.09.2001 JP 2001303239
(43) Date of publication of application: 09.06.2004
(73) Proprietor: SEKISUI CHEMICAL CO., LTD., Osaka-shi, Osaka 530-8565 (JP)
(72) Inventor: NISHIKAWA, Osamu c/o Sekisui Chemical Co., Ltd., Tsukuba-shi, Ibaraki 300-4292 (JP); NOMURA, Shigeki c/o Sekisui Chemical Co., Ltd., Tsukuba-shi, Ibaraki 300-4292 (JP); NAKAMURA, Masanori c/o Sekisui Chemical Co., Ltd., Tsukuba-shi, Ibaraki 300-4292 (JP); SUGIMOTO, Toshiya c/o Sekisui Chemical Co., Ltd., Tsukuba-shi, Ibaraki 300-4292 (JP)
(74) Representative: Müller-Boré & Partner Patentanwälte
(86) International application number: PCT/JP2002/009144
(87) International publication number: WO 2003/026051

(56) References cited:
- EP-A- 0 875 950
- EP-A1- 1 085 038
- EP-A2- 0 731 519
- WO-A-99/61141
- DE-A1- 19 962 941
- JP-A- 10 204 172
- JP-A- 2000 090 946
- JP-A- 2001 035 509
- JP-A- 2001 076 734
- US-A- 5 246 792
- US-A1- 2002 001 744
- US-B1- 6 172 152
- HONMA I ET AL: "Protonic conducting properties of sol-gel derived organic/inorganic nanocomposite membranes doped with acidic functional molecules" SOLID STATE IONICS, NORTH HOLLAND PUB. COMPANY. AMSTERDAM, NL, vol. 120, no. 1-4, 1 May 1999 (1999-05-01), pages 255-264, XP004164444 ISSN: 0167-2738

## Description

### TECHNICAL FIELD

The present invention relates to an assembly of a proton-conductive membrane and gas diffusion electrodes (hereinafter sometimes referred to as a membrane-electrode assembly') in a polymer electrolyte fuel cell, a method of manufacturing the same, and a polymer electrolyte fuel cell using the same, and more specifically to a membrane-electrode assembly that has high heat resistance and chemical resistance and moreover functions stably even at high temperature, a method of manufacturing the same, and a polymer electrolyte fuel cell that uses the same and hence can cope with high-temperature operation or direct fuel (e.g. methanol) supply.

### BACKGROUND OF THE INVENTION

At present, environmental problems and energy problems are big issues on a global scale, and attention is being given to fuel cells as powerful next-generation power generating apparatuses able to contribute to resolving these problems. This is because fuel cells have a very high power efficiency compared, for example, with thermal power generation using fossil fuels, and do not discharge atmospheric pollutants and hence are excellent in environmental terms.

Fuel cells are categorized according to the type of the electrolyte constituting the fuel cell into a phosphoric acid type, a molten carbonate type, a solid oxide type, a solid polymer type and so on; of these, polymer electrolyte fuel cells (hereinafter sometimes referred to as 'PEFCs') are ranked as systems that will be the leading torchbearers of the next generation as fuel cells for small-scale on-site power generation, for vehicle power sources and the like, for portable equipment, and so on, this being because the apparatus is smaller in size and higher in power than the other types.

The basic structure of a PEFC is a structure in which electrodes having a catalyst (typically platinum) supported thereon are disposed on both sides of a proton- (hydrogen ion-) conductive membrane (a so-called membrane-electrode assembly); furthermore, a pair of separators having a structure for supplying fuel are disposed on the outside thereof on both sides. Taking this as a unit cell, a stack of such cells that are adjacent to one another are connected together, resulting in a constitution for which the desired electrical power can be extracted.

If, for example, hydrogen is supplied as a fuel from one side (generally called the anode or fuel electrode) of such an assembly, then the reaction H₂ → 2H⁺ + 2e⁻ occurs on the fuel electrode side due to the catalyst, thus generating protons and electrons.

Here, the protons pass through the proton-conductive membrane in contact with the electrode, and are supplied to the side of the opposite electrode (generally called the cathode or oxygen electrode). Moreover, the electrons are collected at the electrode on the fuel electrode side, and after being used as electricity, are supplied to the oxygen electrode side. On the oxygen electrode side, on the other hand, supplied oxygen, the protons that have passed through the proton-conductive membrane, and the electrons that have been used as electricity are received, and the reaction 1/2O₂ + 2H⁺ + 2e⁻ → H₂O occurs due to the catalyst.

In this way, the chemical reactions due to the operation of the fuel cell occur at the interface parts between the proton-conductive membrane and the catalyst-supporting electrodes, and hence the structure of the interface between the membrane, the electrode and the catalyst greatly affects the performance, for example the power efficiency.

An assembly of a membrane, a catalyst and electrodes is generally called a membrane-electrode assembly (hereinafter sometimes abbreviated to 'MEA'), and has become one of the main fields of technological development for fuel cells.

In an MEA, it is necessary for the membrane, the catalyst and the electrode to be mixed together with a suitable interface. That is, taking the fuel electrode side as an example, it is necessary for the hydrogen or the like, which is the fuel, to be able to come into contact with the catalyst surface, and for the protons and electrons generated from the hydrogen to be efficiently transferred to the membrane and the electrode respectively.

At present, the thing most standardly used as the proton-conductive membrane for a fuel cell is a thermoplastic sulfonated fluororesin (representative example trade name 'Nafion^{®}', made by E. I. du Pont de Nemours and Company). In the case of such a thermoplastic membrane, a method in which electrodes having a catalyst supported thereon are joined on by hot pressing is common.

However, with the hot pressing method, there is a problem that the gas diffusion pores in the electrodes deform or become blocked up, and hence the ability to supply the fuel drops; moreover, because the membrane is strongly heated, albeit for a short time, there is a risk that a change may be brought about in the structure of the resin constituting the membrane, causing a drop in the proton conductivity of the membrane.

Rather than the hot pressing method, a method has thus been proposed in which a polymer electrolyte comprising a sulfonated fluororesin or the like is dissolved in a suitable solvent, and the membrane and the electrodes are joined together using this mixture.

For example, in Japanese Patent Application Laid-open No. 11-339824 there is disclosed a method in which a mixture obtained by dissolving an ion exchange resin comprising a perfluorocarbon polymer in a alcohol solvent, a fluorined hydrocarbon solvent, or a solvent comprising a mixture thereof is used; with such a method, a suitable mixed state and interface structure between the proton-conductive resin, the catalyst and the electrode can be produced in advance.

Moreover, a method in which a polymer electrolyte solution is applied to form an interface, and then hot pressing is carried out has also been proposed, as in Japanese Patent Application Laid-open No. 11-40172. This is a method in which a proton-conductive polymer that has been dissolved in a solvent is applied onto a catalyst layer, and drying is carried out to form a proton-conductive polymer layer, and then joining to a solid polymer electrolyte membrane is carried out under heating and application of pressure.

Such a method using an adhesive is good in that a suitable mixed state and interface structure between the proton-conductive resin, the catalyst and the electrode can be produced in advance, but in the case that a sulfonated fluororesin is used as the adhesive binder, there is a problem that the heat resistance is insufficient. With a sulfonated fluororesin such as Nafion^{®} (registered trademark), ion channels are formed through aggregation of the sulfone groups, and this produces the proton conductivity.

However, due to being thermoplastic, at above a certain temperature a sulfonated fluororesin undergoes plastic deformation, and hence the ion channel structure is destroyed. For example, the glass transition temperature (Tg) of Nafion^{®} (registered trademark) is approximately 130°C, and plastic deformation occurs in a short time above this temperature, and also gradually even at 100 to 130°C, and thus the ion conductivity drops. For such a reason, regarding the temperature at which Nafion^{®} (registered trademark) can be used stably, the limit is considered to be 80°C.

With polymer electrolyte fuel cells at present, in most cases a sulfonated fluororesin such as Nafion^{®} (registered trademark) is used as the electrolyte membrane, and hence the operating temperature is limited to being in a relatively low temperature region from room temperature to approximately 80°C.

With a fuel cell, an oxidation reaction is involved, and hence heat is generated during operation. In the case that Nafion^{®} is used as the electrolyte membrane, it is necessary to control the operating temperature to be not more than 80°C, and hence the reduction of the temperature with some kind of cooling apparatus (generally a water cooling method is adopted) becomes needed in the separator parts, and there is thus a problem that it is not possible to make best use of the characteristic of polymer electrolyte fuel cells that size reduction is possible. Moreover, regarding the fuel cell operation itself, the higher the temperature the better the efficiency, but because the operating temperature is made to be approximately 80°C in accordance with the heat resistance of the membrane or the MEA, a limit also arises with regard to the efficiency.

Furthermore, in the case that impurities such as carbon monoxide are contained in the hydrogen that is the fuel, catalyst poisoning occurs markedly, and hence it is necessary to make the hydrogen of high purity, and in particular in the case of producing the fuel via a reformer, the reformer must be made large or elaborate, and thus the original advantage of the apparatus being small is lost, and moreover the cost rises.

If the operating temperature of the apparatus can be raised to 100°C or more, then the power efficiency rises, and moreover use of the discharged heat becomes possible, and hence the energy can be utilized more efficiently. In particular, if the operating temperature can be raised as far as 140°C, then not only does the efficiency rise and use of the discharged heat become possible, but also the scope of selection of the catalyst material broadens, and hence it is possible to realize a cheap fuel cell.

Moreover, at 100°C or more, efficient cooling can be achieved by refluxing water, and hence size reduction including the cooling apparatus can be achieved. Furthermore, it is known that catalyst poisoning can also be reduced by making the temperature high, and hence it is often the case that operation at high temperature is advantageous.

From such viewpoints, research and development into membranes able to withstand higher temperatures is being promoted. For example, Ogata et al. have manufactured a heat-resistant membrane using a heat-resistant aromatic polymer compound, and have reported this in 'Solid State Ionics, 106 (1998), 219'. Moreover, in Japanese Patent Application No. 2000-038727 and Japanese Patent Application No. 2002-134015, the present applicants have already proposed a membrane material that exhibits stable proton conductivity even at high temperature, this being by manufacturing an organic-inorganic composite membrane based on a completely new idea.

However, even if such a heat-resistant membrane is obtained, if a fluororesin is used as the joining agent in the membrane-electrode assembly as in above-mentioned Japanese Patent Application Laid-open No. 11-339824 or Japanese Patent Application Laid-open No. 11-40172, then the membrane-electrode assembly will not be heat-resistant, and hence ultimately high-temperature operation as a fuel cell will not be possible. With a membrane-electrode assembly using such a material, there is a possibility that the structure may degenerate or the resin may melt at the assembly interfaces during high-temperature operation, and hence stable fuel cell operation is not possible.

A conventional process for manufacturing a porous separator is provided by EP0875950.

Moreover, with fuel cells at present, methanol or the like is processed using a reformer to extract hydrogen and this hydrogen is used as the fuel, but in recent years vigorous research has also been carried out into direct methanol type fuel cells in which methanol is introduced into the fuel cell directly. In the case of a direct methanol type fuel cell, the membrane must be not only heat-resistant but also methanol-resistant.

For example, regarding Japanese Patent Application No. 2002-134015 filed by the present applicants, usage is also possible with a direct methanol type fuel cell, but here as well if a thermoplastic material such as a fluororesin is used during the joining to form the membrane-electrode assembly, then not only will the heat resistance become a problem, but moreover there will be a risk of the catalyst being liberated or the pores in the gas diffusion electrodes becoming blocked up or due to extreme swelling or dissolution.

Moreover, in the case that a fluororesin is made to be present at the catalyst interface, special processing becomes necessary when recovering the catalyst, and hence the advent of a non-halogenated resin material is also desired from this perspective.

In view of the problems of the prior art described above, it is an object of the present invention to provide a membrane-electrode assembly that has high heat resistance and chemical resistance and moreover functions stably even at high temperature, a method of manufacturing the same, and a polymer electrolyte fuel cell and a direct methanol type fuel cell that use the same and hence can cope with high-temperature operation.

### SUMMARY OF THE INVENTION

To resolve the above problems, the present inventors carried out assiduous research into various membrane-electrode joining methods, and as a result discovered that by introducing a curable material having a crosslinked structure into the joining parts, a membrane-electrode assembly can be obtained for which structural changes and so on do not occur even at high temperature, a suitable interface structure can be maintained, and a stable performance is exhibited even at a high temperature of 100°C or more. The present invention was accomplished based on these findings.

That is, according to the first aspect of the invention, a membrane-electrode assembly is provided according to independent claim 1.

Moreover, according to a second aspect of the invention, a method of manufacturing a membrane-electrode assembly is provided according to independent claim 11. Moreover, according to a third aspect of the invention, a method of manufacturing a membrane-electrode assembly is provided according to independent claim 12. Further aspects of the invention are provided by the dependent claims 2 to 10 and 13 to 25.

### BRIEF DESCRIPTION OF THE DRAWINGS

Fig. 1 is a schematic sectional view of a membrane-electrode assembly of the present invention containing fine particles having a precious metal catalyst supported thereon.
Fig. 2 is a schematic sectional view of a membrane-electrode assembly of the present invention that uses an electrode having a precious metal catalyst supported thereon.
Fig. 3 is a layout drawing showing an apparatus for evaluating the power generating performance of a membrane-electrode assembly of the present invention.
Fig. 4 is a drawing in which a membrane-electrode assembly is inserted into a fuel cell unit cell.

### NOTATION

- 1: Joining part
- 2: Three-dimensionally crosslinked body-containing material
- 3: Carbon fine particles
- 4: Precious metal catalyst
- 5: Electrolyte membrane
- 6: Gas diffusion electrode
- 11: Hydrogen supply
- 12, 14: Nitrogen supply
- 13: Oxygen supply
- 15, 16, 17, 18: Servo valve
- 19, 20, 21, 22: MFC
- 23: Hydrogen bubbler
- 24: Oxygen bubbler
- 25: Hydrogen stream
- 26: Oxygen stream
- 27: Anode
- 28: Membrane-electrode assembly
- 29: Cathode
- 30: Electronic load device
- 31, 32: Humidifying trap
- 33, 34: BPV
- 35,36: Vent
- 40: Separator
- 41: Collector plate
- 42: Sandwiching bolt

### PREFERRED EMBODIMENTS OF THE INVENTION

Following is a detailed description of the present invention for each item.

### 1. Structure of membrane-electrode assembly

The membrane-electrode assembly of the present invention is a structure in which a proton-conductive membrane and gas diffusion electrodes are joined together using a material having a three-dimensionally crosslinked structure that comprises metal-oxygen bonds and is formed through a sol-gel reaction; the characteristic feature of the membrane-electrode assembly is that a structure having a specified crosslinked structure as described below is used as the membrane-electrode joining parts that join the proton-conductive membrane and the gas diffusion electrodes together.

'Membrane-electrode joining parts' in the present invention indicates parts that the membrane and the electrodes do not possess before the joining, but that are newly formed through the joining.

The most important role of the membrane-electrode assembly is to raise the reaction efficiency of a catalyst present at the membrane-electrode joint interfaces. As described earlier, in a fuel cell, on the fuel electrode side hydrogen is decomposed into protons (hydrogen ions) and electrons, and on the oxygen electrode side the protons, the electrons and oxygen are combined to form water, and these reactions are promoted by a catalyst. Platinum or a precious metal alloy containing platinum is predominantly used as the catalyst.

At this time, at the fuel electrode for example, the catalyst must be in direct contact with the fuel (e.g. hydrogen gas). If the catalyst is not in direct contact with the fuel, then it will not be possible to exert an action of decomposing the hydrogen into protons and electrons. Moreover, the catalyst must be in contact with a material that is capable of conducting electrons (electricity) (a support or electrode). Electrons generated at the catalyst surface pass through the catalyst itself, are conveyed into an electrically conductive material or an electrode that is in contact with the catalyst, and are led to the outside. Furthermore, the catalyst must be in contact with a proton-conductive material. Protons generated at the catalyst surface are conveyed into the proton-conductive material, and then pass through the proton-conductive membrane and are conveyed to the oxygen electrode side.

On the other hand, on the oxygen electrode side as well, the catalyst is in contact with an electron-conductive material, and obtains electrons (current) introduced in from the outside through this contacting part, and moreover receives protons from a part in contact with the proton-conductive membrane or a proton-conductive material that is joined to the proton-conductive membrane, and furthermore reacts oxygen, the protons and the electrons together at a part in direct contact with the oxygen, thus forming water.

In this way, the catalyst must be in contact with each of the fuel gas or oxygen gas, a proton-conductive material, and an electron-conductive material, and it is necessary for an interface to be formed with each. Such an interface is called a three-phase interface. In the membrane-electrode assembly, it is necessary not merely for the membrane and the electrode to be joined together, but also for the three-phase interface of the catalyst contained at the joint interface to be controlled; the membrane-electrode assembly is thus formed under an extremely subtle balance.

As described above, with a fuel cell, if operation at high temperature is possible, then great advantages can be enjoyed, for example the energy efficiency is raised, catalyst poisoning is reduced, and the cooling apparatus can be simplified due to an improvement in the cooling efficiency. To realize such a fuel cell that can operate at high temperature, the membrane, the electrodes and the membrane-electrode joining parts are all required to be heat-resistant. As the membrane, the electrodes and the membrane-electrode joining parts, ones that undergo deformation or degeneration at a temperature close to the operating temperature of the fuel cell (e.g. approximately 100 to 150°C) cannot be used. If the material undergoes deformation, then the three-phase interface will be destroyed or undergo degeneration, dealing a great blow to the reaction efficiency of the fuel cell.

As materials that do not undergo such deformation or degeneration, there are materials having a three-dimensionally crosslinked structure. Such a crosslinked structure can easily be formed by using a so-called crosslinking reactive material as a raw material.

Here, as the three-dimensionally crosslinked structure, organic crosslinking such as epoxy crosslinking or polyfunctional acrylic crosslinking can be used, but all of these organic crosslinking bonds undergoes hydrolysis under the conditions of high temperature, high humidity, and high proton concentration (strong acidity) that occur under the operating environment of a fuel cell, and hence it may not be possible to maintain a stable structure over a prolonged period.

In contrast, in the present invention, a structure that is three-dimensionally crosslinked predominantly through metal-oxygen bonds is used. Metal-oxygen bonds are extremely stable compared with organic crosslinking bonds (which predominantly comprise polar bonds such as ester bonds or ether bonds), and exist stably even under the operating conditions of a fuel cell. Moreover, these metal-oxygen bonds can easily be obtained through a sol-gel reaction. Here, a sol-gel reaction is a reaction in which metal-oxygen-metal bonds are formed through hydrolysis and condensation reactions, and typically indicates the formation of metal-oxygen-metal bonds through the hydrolysis and condensation of an alkoxide of silicon, titanium, aluminum or zirconium.

The membrane-electrode assembly of the present invention is an article formed by joining together a proton-conductive membrane and electrodes. There are no particular limitations on the electrodes used here. In general, regarding the electrodes, a gas must be made to come into contact with a catalyst, and hence it is often the case that the electrodes themselves have a property of allowing a gas to pass therethrough. An electrode having a property of allowing a gas to pass therethrough in this way is called a gas diffusion electrode, and various ones are known, for example plate-like ones and cloth-like ones; in the present invention, any ones may be used, provided they are heat-resistant.

Moreover, there exist electrodes that have a catalyst supported thereon in advance, and electrodes having no catalyst supported thereon, and either may be used.

At the joint interfaces of the membrane-electrode assembly, a catalyst is essential, and hence it is necessary to dispose a catalyst at the interfaces in some form. At this time, there are no particular limitations on the place where the catalyst is disposed, with any part being acceptable provided it is at an interface; nevertheless, in the case that the electrodes do not possess the catalyst in advance, the catalyst is preferably disposed at the joint interfaces of the membrane-electrode assembly. Note that as other alternative means, the catalyst may be supported in advance on the proton-conductive membrane.

Regarding the catalyst, reaction occurs at the surface thereof, and hence it is preferable for the surface area to be large, i.e. for the catalyst to have as small a particle diameter as possible. It is difficult to handle such a catalyst having a small particle diameter as is, and hence a catalyst supported on some kind of support can be used. As described earlier, it is preferable for the support to have electron conductivity, and hence as a typical support carbon fine particles (carbon black) can be used.

In the present invention, in the case of using electrodes not having a catalyst supported thereon in advance, in the joining parts carbon fine particles having a catalyst supported thereon are disposed at the interfaces. That is, in the present invention, at the joint interfaces there is a structure in which the electrode and the carbon fine particles having the catalyst supported thereon are joined together via a three-dimensionally crosslinked structure that is heat-resistant, acid-resistant and water-resistant. Through such a constitution, a membrane-electrode assembly having ample heat resistance is formed.

On the other hand, in the case that electrodes having a catalyst supported thereon in advance are used in the present invention, a structure is formed in which the catalyst on the electrode and the proton-conductive membrane are joined together via a three-dimensionally crosslinked structure so as to form a suitable interface. Through such a constitution, a membrane-electrode assembly having ample heat resistance is formed.

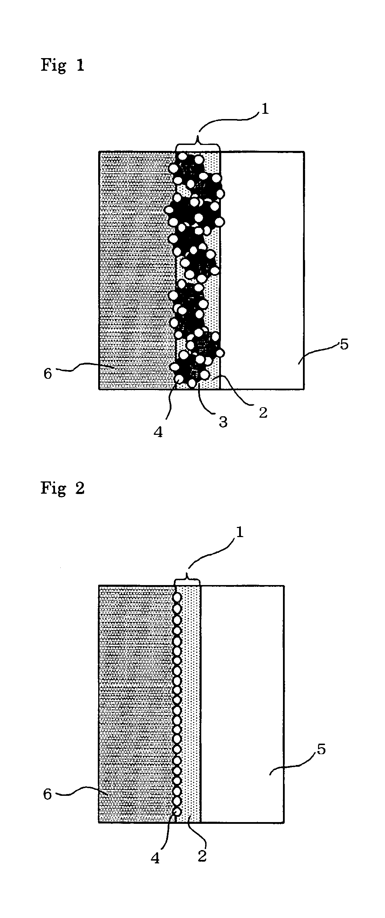

Examples of the structures described above will now be described with drawings. Fig. 1 is a schematic sectional view of a membrane-electrode assembly in which carbon fine particles having a catalyst supported thereon are disposed at a joining part; at a joining part 1 between a gas diffusion electrode 6 and a proton-conductive membrane 5, carbon fine particles 3 having a precious metal catalyst 4 supported thereon are disposed in a three-dimensionally crosslinked body-containing material 2, thus forming a three-phase interface. Fig. 2 is a schematic sectional view of a membrane-electrode assembly that uses an electrode having a catalyst supported thereon in advance. A joining part 1 between a proton-conductive membrane 5 and a gas diffusion electrode 6 having a precious metal catalyst 4 supported on a surface thereof is formed from a three-dimensionally crosslinked body-containing material 2, thus forming a three-phase interface.

Such a constitution can be suitably used even in a direct methanol type fuel cell in which a liquid fuel such as methanol, not a gaseous fuel such as hydrogen gas, is introduced directly as the fuel. That is, in the case of a membrane-electrode assembly that is joined together using a polymer electrolyte that does not have a crosslinked structure, the polymer electrolyte will have a high affinity for methanol, and as a result in the case that methanol infiltrates into the joint surface, there will be a possibility of swelling or dissolution occurring and thus the three-phase interface being destroyed, and hence it will not be possible to secure stable fuel cell operation. In contrast, with the membrane-electrode assembly of the present invention, the joining is carried out using a three-dimensionally crosslinked structure, and hence even if a liquid fuel such as methanol is introduced in directly, swelling or dissolution will not occur, and thus stable fuel cell operation will be possible.

As described earlier, considering heat resistance and acid resistance, the three-dimensionally crosslinked structure contained in the joining parts of the membrane-electrode assembly of the present invention is constituted through metal-oxygen bonds. The metal mentioned here indicates aluminum, titanium, zirconium, silicon or the like; any of these may be used, but out of them it is preferable to use silicon.

A three-dimensionally crosslinked structure of silicon-oxygen bonds is a so-called silica structure, and has sufficient stability, and moreover can be procured cheaply. With aluminum, titanium, zirconium and so on as well, the stability is sufficient, but the cost is somewhat high, and control of the crosslinked structure forming reaction when forming the membrane-electrode assembly may be difficult. Here, aluminum, titanium or zirconium, and silicon may be used mixed together, but in this case it is preferable for the silicon atoms to be at least 50atom% out of all of the metal atoms. If such a constitution is adopted, then a membrane-electrode assembly can be provided which is cheap and for which joining is easy.

Here, it is preferable for the three-dimensionally crosslinked structure comprising metal-oxygen bonds or silicon-oxygen bonds disposed at the membrane-electrode assembly interfaces to be present in the three-phase interface described earlier, and to have an ability as a proton-conductive material.

That is, regarding the three-phase interface, as described earlier, it is necessary for the catalyst to be suitably in contact with three phases, namely a gas phase, a proton conducting phase and an electron conducting phase. Here, it is preferable for the three-dimensionally crosslinked structure comprising metal-oxygen bonds or silicon-oxygen bonds to take on the role of the proton conducting phase.

The proton conductivity possessed by the three-dimensionally crosslinked structure indicates, for example, a conductivity of at least 1×10⁻⁵S/cm in proton conductivity measurements, which can be carried out using an impedance analyzer or the like; preferably a conductivity of at least 1×10⁻⁴S/cm, more preferably at least 1×10⁻³S/cm, is exhibited.

To give the three-dimensionally crosslinked structure such a proton conductivity, it is preferable to use some kind of proton conductivity-bestowing material. A three-dimensionally crosslinked structure comprising silicon-oxygen bonds, for example, has a small amount of unreacted silanol groups, and these silanol groups have proton conductivity, but a sufficient proton conductivity cannot be obtained through only these silanol groups, and furthermore one can also envisage cases in which silanol groups are lost under fuel cell operating conditions through further progression of the crosslinking reaction or the like, and hence a stable conductivity may not be exhibited. It is thus preferable to add a proton conductivity-bestowing material to the structure.

A proton conductivity-bestowing material that can be used in the present invention should be a so-called proton acid compound, with there being no particular limitations. Note, however, that a suitable strength (suitably low pKa) is necessary for the proton acid, and hence an organic acid is not desirable, but rather an inorganic acid such as sulfuric acid, phosphoric acid, hydrochloric acid, sulfonic acid, phosphonic acid, or a heteropolyacid is used.

Note, however, that to stably exhibit proton conductivity, it is necessary for the proton conductivity-bestowing material to exist stably in the three-dimensionally crosslinked structure. It is thus preferable for the proton acid to be a molecule having a size sufficient to be encapsulated in the three-dimensionally crosslinked structure, or to have some kind of interaction with the three-dimensionally crosslinked structure and thus be able to exist stably in the structure, or to be directly bonded to the three-dimensionally crosslinked structure; any of these can be used in the present invention.

Out of the above, examples of the case in which the proton acid is a molecule having a size sufficient to be encapsulated in the three-dimensionally crosslinked structure are polyphosphoric acid, heteropolyacids, and so on. Polyphosphoric acid is a dehydration condensation product of phosphoric acid, and if the molecular weight is sufficiently high, can exist stably in the three-dimensionally crosslinked structure. However, polyphosphoric acid may be hydrolyzed to form phosphoric acid under fuel cell operating conditions of high temperature and high humidity, and in the case that the polyphosphoric acid has become phosphoric acid it may be dissipated from the three-dimensionally crosslinked structure due to the molecular weight becoming sufficiently low.

In contrast, a heteropolyacid is a stable compound, and can exist stably without decomposing even under fuel cell operating conditions. A heteropolyacid is a large molecule having a molecular weight of several thousand; in general a plurality of metals and oxygens have a closed shell structure called a Keggin structure or a Dawson structure, and the heteropolyacid has any of various proton valencies depending on the central element. The acidity is extremely high, with the pKa being negative, and hence a heteropolyacid can be suitably used as a proton conductivity-bestowing material contained in the three-dimensionally crosslinked structure in the membrane-electrode assembly of the present invention. Moreover, with these heteropolyacids, there are cases in which the heteropolyacid undergoes an electrostatic interaction with the metal-oxygen bonds possessed by the three-dimensionally crosslinked structure, and hence such a heteropolyacid can exist more stably in the three-dimensionally crosslinked structure, and thus can be preferably used.

As such a heteropolyacid, considering stability, phosphotungstic acid, silicotungstic acid or phosphomolybdic acid can be preferably used. All of these compounds are commercially available, and are easily procured.

There are no particular limitations on the amount of the heteropolyacid introduced into the three-dimensionally crosslinked structure, but to sufficiently exhibit proton conductivity, it is necessary for at least 3wt% of the heteropolyacid to be contained relative to the three-dimensionally crosslinked structure; regarding the upper limit, on the other hand, there are no particular limitations provided the heteropolyacid can exist stably, but in general the amount introduced is not more than 200wt% relative to the three-dimensionally crosslinked structure. This amount introduced is determined through the amount introduced during manufacture.

Furthermore, as a proton acid, a structure represented by undermentioned formula (I) may be contained. 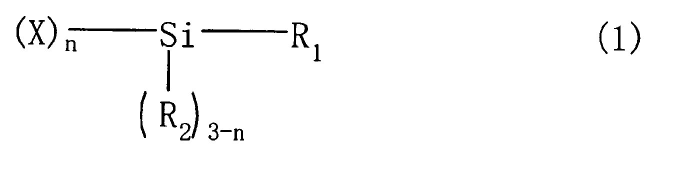 (In the formula, X represents a -O- bond that is involved in crosslinking or an OH group, R₁ represents any organic group containing an acid group, R₂ represents an alkyl group having 4 or fewer carbon atoms, n is an integer from 1 to 3, and at least one of the X's is a -O- bond that is involved in crosslinking.)

In this case, the above structure is directly bonded to the three-dimensionally crosslinked structure through covalent bonding, and can thus exist stably within the membrane-electrode assembly, and hence such a structure can be preferably used.

Here, the acid group contained by R₁ in formula (1) is preferably a sulfonic acid group or a phosphonic acid group. These acid groups have a sufficient acid strength, and thus act effectively as a proton conductivity-bestowing material, and moreover even in oxidizing conditions can perform stably without being further oxidized.

Moreover, as a specific form of the structure of formula (1), there is a structure represented by undermentioned formula (2). 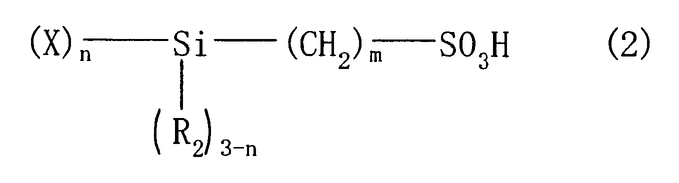 (In the formula, X represents a -O- bond that is involved in crosslinking or an OH group, R₂ represents an alkyl group having 4 or fewer carbon atoms, m is an integer from 1 to 20, n is an integer from 1 to 3, and at least one of the X's is a -O- bond that is involved in crosslinking.)

The acid group shown in formula (2) is a sulfonic acid group, and a methylene chain is used between the silicon atom and the sulfonic acid group. A methylene chain is stable, with there being no possibility of being hydrolyzed by an acid, and moreover in the case of not having a branched structure or the like is also stable to oxidation, and can thus be suitably used as the structure linking the sulfonic acid to the silicon atom.

The compound represented by formula (2) may be a solid that has a three-dimensionally crosslinked structure even when alone, or, despite being capable of joining the membrane and the electrode together, may be joined to a structure that is three-dimensionally crosslinked through other metal-oxygen bonds, this being to adjust the physical properties of the crosslinked structure and so on.

Furthermore, an inorganic acid and an acid represented by formula (1) may be used together.

In the case of using an inorganic acid as a proton conductivity-bestowing material, some kind of structure that is three-dimensionally crosslinked through metal-oxygen bonds becomes necessary for supporting the inorganic acid. Moreover, even in the case of using a compound represented by formula (1), another three-dimensionally crosslinked structure may be included for adjusting the physical properties and so on.

Here, regarding the three-dimensionally crosslinked structure, a structure represented by undermentioned formula (3) can be put forward as an example of a three-dimensionally crosslinked structure having silicon-oxygen bonds, which can be particularly preferably used out of three-dimensionally crosslinked structures as already mentioned.

Si(X)₄ (3)

(In the formula, X represents a -O- bond that is involved in crosslinking or an OH group, and at least one of the X's is a -O- bond that is involved in crosslinking.)

The compound of formula (3) is the simplest structure having silicon-oxygen bonds, and is stable to heat, oxidation and acids, and has a low raw material cost, and hence can be preferably used.

Furthermore, a structure represented by undermentioned formula (4) can also be suitably used.

Si (X)ₙ (R₂) ₄₋ₙ (4)

(In the formula, X represents a -O- bond that is involved in crosslinking or an OH group, R₂ represents an alkyl group having 20 or fewer carbon atoms, n is an integer from 1 to 3, and at least one of the X's is a -O- bond that is involved in crosslinking. In the case that n is 1 or 2, the R₂'s may be a mixture of different alkyl groups.)

A structure represented by above-mentioned formula (4) is obtained by substituting part of the structure of formula (3) with alkyl group(s). It becomes possible to adjust the physical properties, for example to give the three-dimensionally crosslinked structure flexibility. Furthermore, alkyl groups are water-repellent, and hence there is an effect of repelling excess water introduced on the fuel electrode side or water generated on the oxygen electrode side, and efficiently discharging this water outside the system, thus preventing a drop in the rate of gas introduction onto the catalyst surface (so-called flooding) due to water accumulating on the catalyst surface.

Furthermore, a structure represented by undermentioned formula (5) can also be preferably used. 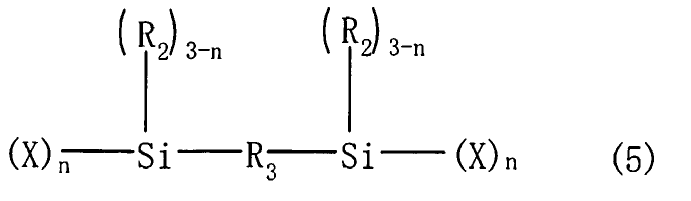 (In the formula, X represents a -O- bond that is involved in crosslinking or an OH group, R₂ represents an alkyl group having 4 or fewer carbon atoms, R₃ represents a hydrocarbon having 30 or fewer carbon atoms, n is an integer from 1 to 3, and at least one of the X's is a -O- bond that is involved in crosslinking.)

As with a structure of formula (4), a structure represented by above-mentioned formula (5) can also be used for adjusting the flexibility, adjusting the water repellency or the like, and furthermore the reactivity can also be adjusted during manufacture, and hence a structure represented by above-mentioned formula (5) can be suitably used.

There are no particular limitations on the proton-conductive membrane used in the membrane-electrode assembly of the present invention. For example, easily obtainable ones include sulfonated fluororesins such as Nafion^{®} (registered trademark), ones obtained by introducing a sulfonic acid or phosphoric acid into a so-called engineering plastic having an aromatic ring in the main chain (representative example: polybenzimidazole), silica glass doped with an acid, and an organic-inorganic composite membrane doped with an acid.

However, with a membrane-electrode assembly having a three-dimensionally crosslinked structure comprising metal-oxygen bonds as described above, although this can be suitably used in the case of joining an ordinary electrolyte membrane and ordinary electrodes together, it can be particularly suitably used with a proton-conductive membrane having a structure that is three-dimensionally crosslinked through metal-oxygen bonds in the proton-conductive membrane, in particular a proton-conductive membrane having a structure that is three-dimensionally crosslinked through silicon-oxygen bonds.

In the case that such a three-dimensionally crosslinked structure exists in the proton-conductive membrane, the affinity to the three-dimensionally crosslinked structure contained in the membrane-electrode assembly is good, and in some cases the three-dimensionally crosslinked structure in the proton-conductive membrane and the three-dimensionally crosslinked structure in the membrane-electrode assembly interact or bond with one another, whereby an integrated assembly in which there are no joints from the membrane to the electrodes can be produced. Moreover, in this case, if the membrane-electrode assembly is formed in a so-called half-crosslinked state in which the three-dimensionally crosslinked structure in the proton-conductive membrane is not a completely crosslinked structure, then integration of the assembly occurs more markedly, which is advantageous.

As a membrane having such a three-dimensionally crosslinked structure, it is preferable to use one in which, for example, silica is combined with an existing proton-conductive membrane of Nafion^{®} or the like and a three-dimensionally crosslinked structure is introduced into the membrane through a sol-gel reaction, one proposed by the present applicants in Japanese Patent Application No. 2000-038727 or Japanese Patent Application No. 2002-134015, or the like.

### 2. Method of manufacturing membrane-electrode assembly

There are no particular limitations on the method of manufacturing the membrane-electrode assembly of the present invention, but the membrane-electrode assembly can, for example, be manufactured using methods such as the following.

### (1) Case that catalyst is not supported on electrode

In the case that the catalyst is not supported on the electrode, it is necessary to dispose the catalyst inside the membrane-electrode assembly, and hence a step of adding the catalyst is included when forming the assembly. Regarding the catalyst, as described earlier, one supported on carbon fine particles can be preferably used.

Consequently, the method of manufacturing a membrane-electrode assembly of the present invention includes a first step of applying a liquid containing a crosslinkable monomer containing silicon and carbon fine particles having a precious metal catalyst supported thereon onto at least one face of a proton-conductive membrane.

Here, regarding the crosslinkable monomer containing silicon, a detailed description will be given later.

Regarding the carbon fine particles having a precious metal catalyst supported thereon, for example carbon black having platinum or platinum alloy fine particles supported thereon can be used, for example various carbon-fine-particle-supported catalysts can be procured from Tanaka Kikinzoku Kogyo K.K.

Regarding the method of mixing together the crosslinkable monomer containing silicon and the carbon fine particles having precious metal fine particles supported thereon, a publicly known method can be used, for example a high-speed agitator, a homogenizer, an ultrasonic agitator, a planetary agitator, a ball mill or the like can be suitably used.

Moreover, a solvent may be used during the mixing; there are no particular limitations on solvents that can be used, provided that the solvent is such that the catalyst-supporting carbon fine particles can be dispersed, and the crosslinkable monomer containing silicon can be dispersed or dissolved. In general, alcohols such as methanol, ethanol, 1-propanol, 2-propanol, t-butanol and ethylene glycol, cyclic ethers such as tetrahydrofuran and dioxane, ketones such as acetone and methyl ethyl ketone, carboxylic acids such as acetic acid and propionic acid, cellosolves such as ethylene glycol monomethyl ether, ethylene glycol monoethyl ether and ethylene glycol monobutyl ether, water, and so on can be used. Moreover, publicly known solvents may be mixed with these solvents, and furthermore a surfactant or the like may be added.

In the case of using a solvent, it is preferable for the solid component concentration in the liquid, i.e. the total concentration of the crosslinkable monomer containing silicon and the precious-metal-catalyst-supporting carbon fine particles to be at least 5wt%, more preferably 10 to 50wt%. If the concentration is below 5wt%, then it will not be possible to secure a sufficient amount of the catalyst in the membrane-electrode assembly, and moreover there will be a possibility of the amount of the crosslinkable monomer being insufficient and hence it not being possible to achieve sufficient joining.

Moreover, if water is added in advance, then the crosslinkable monomer containing silicon will be hydrolyzed to a suitable extent and thus will cover the surface of the catalyst-supporting carbon to a suitable extent, and hence water can be preferably used. Moreover, condensation of the crosslinkable monomer will start to a suitable extent through the water, and hence the shear force during the agitation will increase due to an increase in the viscosity, and thus dispersion will become better, and the viscosity will become more suitable, and thus it should become easier to apply the liquid onto the proton-conductive membrane. Here, there are no particular limitations on the amount of water added, but this amount is preferably at least 5mol% relative to the hydrolyzable silyl compound. An insufficient amount of water can be supplemented by moisture in the air or by carrying out humidification in a subsequent step. The added water is preferably deionized water, and may be added to the liquid as is, or may be added in the form of water of hydration of the proton conductivity-bestowing material or a solvent of the proton conductivity-bestowing material.

Furthermore, an acid or a base may be added as a hydrolysis catalyst. Here, the acid or base added is used as a catalyst for the sol-gel reaction, and may be different to that used for bestowing proton conductivity.

Furthermore, in the liquid prepared in the first step, it is preferable to include in advance the proton conductivity-bestowing material for bestowing proton conductivity. Regarding the proton conductivity-bestowing material, a detailed description will be given later.

The first step includes a step of applying the liquid prepared in this way onto the proton-conductive membrane. Regarding the method of application, a publicly known application method can be used, for example a roll coating method, a spray coating method, a doctor blade method, a dip coating method, a screen printing method, a gravure printing method, a spin coating method, a bar coating method, a curtain coating method, a transfer method, an electrodeposition method or the like can be used.

The method of manufacturing a membrane-electrode assembly of the present invention includes a second step of sticking a gas diffusion electrode onto the proton-conductive membrane onto which the liquid obtained in the first step has been applied.

The sticking on can be carried out using a method in which the gas diffusion electrode is made to come into contact with the face of the proton-conductive membrane onto which the liquid has been applied, and at this time pressure may be applied, and moreover heat may be applied.

Here, the temperature during joining necessary in the second step is a temperature of at least 20°C; there is no particular upper limit, but a temperature for which the physical properties of the membrane are not marred is suitable, and in general the joining is carried out at a temperature of not more than 300°C. If the joining is carried out while applying heat, then the crosslinking reaction of the crosslinkable monomer containing silicon will commence, and hence the joining will be carried out preferably.

At this time, if pressure is applied, then the adhesion between the electrode and the membrane is further improved, and a joint surface having a high reaction efficiency can be formed. In this case, pressure means at least 0.5N/cm², and there are no particular limitations on the upper limit, with it being possible to select a pressure as appropriate such that the electrode and the membrane are not damaged.

Regarding gas diffusion electrodes that can be used in the second step, commercially available ones can be used, specifically such gas diffusion electrodes can be procured from E-TEK Div. of De Nora N.A., Inc. or Toray Industries, Inc.

The method of manufacturing a membrane-electrode assembly of the present invention includes a third step of curing the crosslinkable monomer containing silicon contained in the membrane-electrode assembly manufactured in the second step.

The crosslinkable monomer containing silicon predominantly has hydrolyzable silyl groups, and undergoes hydrolysis and condensation reactions using water in the liquid prepared in the first step or water in the atmosphere. These hydrolysis and condensation reactions involve a so-called sol-gel reaction. Moreover, the crosslinking reaction may be made to proceed to some extent during the first step and the second step.

To carry out the crosslinking reaction more efficiently, in general heating is carried out. The curing reaction is possible even if heating is not carried out, but the curing occurs faster and more completely if heating is carried out, and hence it is preferable to carry out heating. The heating temperature varies according to the structure and concentration contained of the crosslinkable monomer used, the amount of moisture, the amount of the catalyst, and so on, but in general at least 50°C is preferable. Moreover, regarding the upper limit of the heating, there are no particular limitations provided the temperature is such that the structure of the membrane, the electrode, or the joining part is not damaged, but in the present invention it is preferable to use not more than 300°C. Moreover, pressure reduction may be carried out during the heating.

There are no particular limitations on the method of heating, with it being possible to use any heating method, for example heating using a heat source such as an oven, far infrared radiation heating, or induction heating. Moreover, in the case that pressing was used in the second step, the third step may be carried out by continuing heating while still pressing.

Moreover, as the method of heating, one may carry out a preliminary curing step in advance at room temperature, and then carry out a main curing step by heating at a temperature of 20 to 200°C; in this case, the membrane-electrode joining can be realized with the structure controlled more.

Humidification may be carried out during the heating. By carrying out humidification, hydrolysis of the hydrolyzable silyl groups possessed by the crosslinkable monomer can be carried out more efficiently; in the case of carrying out humidification, it is preferable to use humidifying conditions with a relative humidity of at least 50%. By carrying out humidification, it becomes possible to provide a strong membrane-electrode assembly.

The heating time can be determined at the time while observing the state of reaction, and is generally from 10 minutes to 1 week, preferably from 30 minutes to 3 days.

Moreover, after the third step, the membrane-electrode assembly may be subjected to acid treatment using sulfuric acid or the like, or may be washed with water.

### (2) Case that catalyst is supported on electrode

In the case that the catalyst is supported on the electrode, because the catalyst is already present at the membrane-electrode assembly interface, it is not necessary in particular to use carbon fine particles having a precious metal catalyst supported thereon or the like. However, to increase the reaction efficiency, carbon fine particles having a precious metal catalyst supported thereon may be further added.

The method of manufacturing a membrane-electrode assembly of the present invention includes a first step of applying a liquid containing a crosslinkable monomer containing silicon onto at least one face of a proton-conductive membrane.

Here, regarding the crosslinkable monomer containing silicon, a detailed description will be given later.

In many cases the crosslinkable monomer containing silicon is a liquid as is, and hence may be used as is in the present invention; however, it may also be adjusted to a suitable concentration by using a solvent. Regarding the solvent, the various solvents mentioned in manufacturing method (1) above can be used, and moreover the same kind of mixing method can be used; however, in the case that the liquid does not contain catalyst-supporting carbon fine particles or the like, it is easy to dissolve the crosslinkable monomer in any of various solvents, and hence the dissolution can easily be carried out using an ordinary stirrer or shaker. A surfactant or the like may be used, and water may be added. Moreover, regarding points such as including a proton conductivity-bestowing material, this is also as with manufacturing method (1) described above.

The first step includes a step of applying the liquid prepared in this way onto the proton-conductive membrane. Regarding the method of application, various publicly known application methods can be used as mentioned in manufacturing method (1) above.

The method of manufacturing a membrane-electrode assembly of the present invention includes a second step of sticking a gas diffusion electrode having a catalyst supported thereon onto the proton-conductive membrane onto which the liquid obtained in the first step has been applied.

The sticking on can be carried out using a method in which the catalyst-supporting face of the gas diffusion electrode is made to come into contact with the face of the proton-conductive membrane onto which the liquid has been applied, and at this time pressure may be applied, and moreover heat may be applied. The sticking method, the temperature, the pressure and so on are as with manufacturing method (1) described above.

Regarding gas diffusion electrodes having a catalyst supported thereon that can be used in the second step, commercially available ones can be used, specifically such gas diffusion electrodes can be procured from E-TEK Div. of De Nora N.A., Inc..

The method of manufacturing a membrane-electrode assembly of the present invention includes a third step of curing the crosslinkable monomer containing silicon contained in the membrane-electrode assembly manufactured in the second step.

The temperature, time, atmosphere and so on for the curing reaction may be as mentioned in manufacturing method (1) above.

### (3) Proton conductivity-bestowing material contained in the liquid of the first step in the cases of (1) and (2) above

Regarding the membrane-electrode assembly of the present invention, it has already been stated that it is preferable for a gas flow path and a proton-conductive material to be disposed at the surface of the catalyst present in the joining parts, and for the catalyst to be joined to the proton-conductive body.

In the method of manufacturing a membrane-electrode assembly of the present invention, it is preferable for the material used in the joining to have proton conductivity, and it is preferable for some kind of proton conductivity-bestowing material to be included in the liquid prepared in the first step, which is the raw material of the joining material.

As described earlier, the joining material of the membrane-electrode assembly of the present invention is formed through hydrolysis and condensations reaction of hydrolyzable silyl groups, i.e. through a so-called sol-gel reaction. In the sol-gel reaction, the condensation product is not completely formed, but rather some of the silanol (Si-OH) groups remain; since silanol groups have proton conductivity, use as is is possible; however, silanol groups are not strongly acidic and tend not to give high proton conductivity, and moreover in the case that the crosslinking reaction proceeds further the silanol groups themselves may decrease in number.

Consequently, it is preferable to positively add a proton-conductive material.

As described earlier, the proton-conductive material must exist stably in the joining material, and hence one that forms some kind of interaction or bonds with the crosslinkable monomer containing silicon, which is the joining material, or one that has a sufficient molecular weight and can thus be fixed within the crosslinked structure, is preferable.

Of these, as ones that form bonds with the crosslinkable monomer, there are, for example, compounds having a structure represented by undermentioned formula (6), and these can be preferably used. 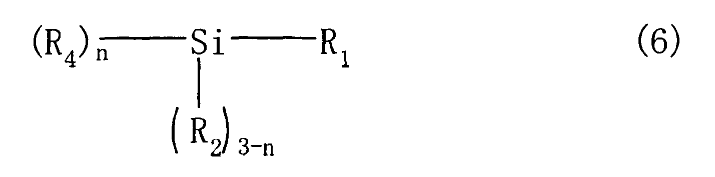 (In the formula, R₄ represents a Cl, OCH₃, OC₂H₅, OC₆H₅, OH or OCOCH₃ group, R₁ represents any organic group containing an acid group, R₂ represents an alkyl group having 4 or fewer carbon atoms, and n is an integer from 1 to 3.)

Here, a compound of formula (6) has a hydrolyzable silyl group, and hence is capable of forming a three-dimensionally crosslinked structure through a sol-gel reaction. That is, the compound is capable of forming a three-dimensionally crosslinked structure alone, and thus can be used as the joining material as is, but can also be made to undergo composite crosslinking with another crosslinkable monomer containing silicon.

Regarding the mixing ratio of the crosslinkable monomer not having an acid group and the compound of formula (6) having an acid group, it is preferable for the structure of formula (6) to be at least 3wt% out of all of the crosslinkable monomers. At less than 3wt%, sufficient proton conductivity cannot be expected.

R₁ in formula (6) contains an acid group, and it is preferable for this acid group to be a sulfonic acid group or a phosphonic acid group.

A sulfonic acid group or a phosphonic acid group has sufficiently high acidity, and is also stable to the environment during fuel cell operation, and hence can be preferably used.

As an example of a structure of formula (6) containing a sulfonic acid group, there are compounds represented by undermentioned formula (7), and these can be preferably used. 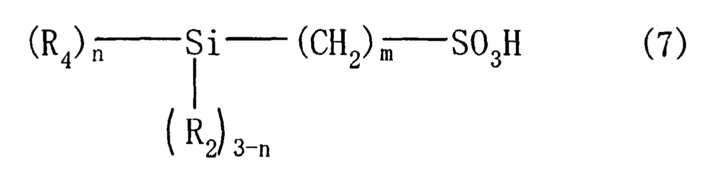 (In the formula, R₄ represents a Cl, OCH₃, OC₂H₅, OC₆H₅, OH or OCOCH₃ group, R₂ represents an alkyl group having 4 or fewer carbon atoms, m is an integer from 1 to 20, and n is an integer from 1 to 3.)

In the structure of formula (7), the bond joining the sulfonic acid group to the silicon atom is a methylene chain. A methylene chain has no branching, and is stable to oxidation, acids, and high temperature and high humidity, and can thus be preferably used. Such compounds are commercially available by Gelest Inc., and moreover various synthesis methods have been established, and hence procurement is easy.

Moreover, an inorganic acid may be used as the proton-conductive material.

Regarding the inorganic acid, a widely used proton acid such as sulfuric acid or phosphoric acid can be used, but as mentioned earlier the inorganic acid must exist stably in the three-dimensionally crosslinked structure, and hence it is preferable for the inorganic acid to have some kind of interaction with the three-dimensionally crosslinked structure, or for the molecular weight of the inorganic acid to be high so that the inorganic acid can be encapsulated in the three-dimensionally crosslinked structure.

Regarding interaction, in general there is ionic interaction, and this may be used; moreover, as an inorganic acid having a high molecular weight, a so-called polyacid, specifically polyphosphoric acid or a heteropolyacid, can be used.

Of these, polyphosphoric acid may undergo hydrolysis, but a heteropolyacid is an extremely stable compound and can thus be preferably used in the present invention.

A heteropolyacid has sufficient acidity, and moreover is stable to high temperature and oxidation. In particular, one having a Dawson structure or a Keggin structure with high acidity can be preferably used, with specific examples being phosphotungstic acid, silicotungstic acid and phosphomolybdic acid.

These heteropolyacids may be mixed with a compound represented by above-mentioned formula (6), or may be combined with a crosslinkable monomer not having a proton acid. In the case of mixing with a crosslinkable monomer not having a proton acid, the mixing is carried out such that the heteropolyacid is at least 3wt% relative to the crosslinkable monomer not having a proton acid. At less than 3wt%, sufficient conductivity cannot be expected. Moreover, there are no particular limitations on the upper limit, provided that it is an amount that can stably exist in the joining material, but as an example the amount is not more than 200wt% relative to the crosslinkable monomer.

These proton-conductive materials are introduced into the liquid prepared in the first step, and the mixing method, the application method and so on are carried out in accordance with the first step.

### (4) Crosslinkable monomer containing silicon

As the joining material of the membrane-electrode assembly, a crosslinkable monomer containing silicon that changes from a liquid (sol) into a solid (gel) is used. Regarding the silicon in the crosslinkable monomer, there are predominantly hydrolyzable silyl groups, and hydrolysis and condensation occur (a sol-gel reaction) in the presence of water, thus forming a three-dimensionally crosslinked body.

In the case of using a compound of formula (6) which has a proton acid and is also a crosslinkable monomer, there is no particular need to use another crosslinkable monomer, but such another crosslinkable monomer may be added for the purpose of adjusting physical properties or the like. Moreover, in the case of using an inorganic acid (heteropolyacid) as the proton conductivity-bestowing material, a crosslinkable monomer is necessary.

Silicon-oxygen bonds formed through a sol-gel reaction are extremely stable, and hence there is resistance to oxidation and heat, and thus silicon-oxygen bonds can be suitably used in the present invention. Moreover, titanium, aluminum, zirconium and so on, for which reactions similar to those of silicon are possible, can be used instead of silicon. Crosslinkable compounds having atoms of these metals other than silicon form a three-dimensionally crosslinked structure having extremely stable metal-oxygen bonds, and hence can be suitably used in the present invention, but on the other hand the price is relatively high, and reaction control is difficult, and hence using together with a crosslinkable monomer containing silicon is preferable. Here, in the case of using together, it is preferable for the silicon atoms to be at least 50% out of all of the metal atom species.

Examples of crosslinkable monomers containing a metal species other than silicon are alkoxy titanates including tetraethoxy titanium, tetraisopropoxy titanium, tetra-n-butoxy titanium, tetra-t-butoxy titanium, and monoalkyl derivatives thereof, dialkyl derivatives thereof, and derivatives thereof substituted with a crosslinking reaction rate controlling group such as acetylacetone, and oligomers of the above, hydrolyzable zirconium compounds such as zirconium tetra-n-butoxide, zirconium tetra-t-butoxide, zirconium tetra-n-propoxide, zirconium tetra-i-propoxide, zirconium tetraethoxide, zirconium tetra(2-methyl-2-butoxide), and zirconium tetra(2-ethylhexyloxide), hydrolyzable aluminum compounds such as aluminum tri-s-butoxide, aluminum tri-n-butoxide, aluminum tri-t-butoxide, aluminum tri-i-propoxide, and aluminum triphenoxide, and so on.

As a crosslinkable monomer containing silicon, for example a compound represented by formula (8) can be suitably used.

Si(R₄)₄ (8)

(In the formula, R₄ represents a Cl, OCH₃, OC₂H₅, OC₆H₅, OH or OCOCH₃ group.)

The compounds represented by formula (8) are all compounds that are the basis of a sol-gel reaction, are cheap, and can be procured in large amounts, and the crosslinked body obtained is extremely stable.

Moreover, a compound represented by undermentioned formula (9) can also be suitably used.

Si(R₄)ₙ(R₂)₄₋ₙ (9)

(In the formula, R₄ represents a Cl, OCH₃, OC₂H₅, OC₆H₅, OH or OCOCH₃ group, R₂ represents an alkyl group having 20 or fewer carbon atoms, and n is an integer from 1 to 3. In the case that n is 1 or 2, the R₂'s may be a mixture of different alkyl groups.)

Here, R₂ in formula (9) is a methyl group, an ethyl group, a propyl group or the like, and compounds having various combinations with various R₄'s can be put forward as examples. For example, in the case that R₄ is an ethoxy group, examples are methyl triethoxy silane, ethyl triethoxy silane, propyl triethoxy silane, butyl triethoxy silane, hexyl triethoxy silane, octyl triethoxy silane, decyl triethoxy silane, dodecyl triethoxy silane, dimethyl diethoxy silane, diethyl diethoxy silane, trimethyl ethoxy silane, and so on; there are various commercially available compounds, for example methoxy derivatives and chloro derivatives of the above.

If these monoalkyl, dialkyl or trialkyl compounds are used, then the physical properties of the joining material can be greatly changed, for example flexibility can be bestowed, or water repellency can be bestowed, thus preventing flooding.

Furthermore, a compound represented by formula (10) can also be suitably used as a crosslinkable monomer. 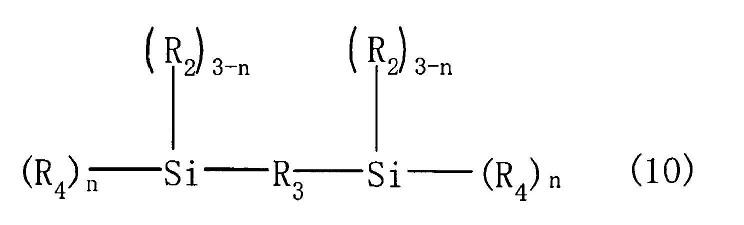 (In the formula, R₄ represents a Cl, OCH₃, OC₂H₅, OC₆H₅, OH or OCOCH₃ group, R₂ represents an alkyl group having 4 or fewer carbon atoms, R₃ represents a hydrocarbon having 30 or fewer carbon atoms, and n is an integer from 1 to 3.)

Here, regarding R₃ in formula (10), examples are ethylene, butylene, hexamethylene, octamethylene, decamethylene, tetradecamethylene, hexadecamethylene, docosamethylene, and so on; various compounds are commercially available or can be synthesized.

Specific examples are 1,2-bis(triethoxysllyl)ethane, 1,4-bis(triethoxysilyl)butane, 1,6-bis(triethoxysilyl)hexane, 1,8-bis(triethoxysilyl)octane, 1,9-bis(triethoxysilyl)nonane, 1,10-bis(triethoxysilyl)decane, 1,12-bis(triethoxysilyl)dodecane, 1,14-bis(triethoxysilyl)tetradecane, 1,22-bis(triethoxysilyl)docosane, 1,4-bis(triethoxysilyl)benzene, and so on; all of these can be obtained through a hydrosilylation reaction of triethoxysilane into the corresponding diene compound. During the hydrosilylation reaction, by using trimethoxysilane, diethoxymethylsilane, ethoxydimethylsilane or the like instead of triethoxysilane, a compound having different hydrolyzable silyl groups can be obtained. Of these, 1,2-bis(triethoxysilyl)ethane, 1,6-bis(trimethoxysilyl)hexane, 1,8-bis(triethoxysilyl)octane, 1,9-bis(triethoxysilyl)nonane, and 1,4-bis(trimethoxysilyl)benzene are commercially available by Gelest Inc.

As with alkyl-substituted silyl compounds, these compounds are capable of improving the physical properties of the joining material, and moreover are capable of controlling the crosslinking reaction, and hence can be preferably used.

The compounds of formulae (8) to (10) can each be selected and used in accordance with the required assembly material, and can be used with no particular limitations on the amount mixed in and so on.

### 3. Polymer electrolyte fuel cell

The fuel cell of the present invention is a polymer electrolyte fuel cell having a membrane-electrode assembly as described above incorporated therein as a unit cell, and a direct methanol type fuel cell is included in the definition.

As described earlier, taking a membrane-electrode joined structure (assembly) in which an electrode is disposed on each side of a proton-(hydrogen ion-) conductive membrane as a unit cell, a pair of separators that form pathways for the fuel and oxygen are installed on the outside thereof, and a stack of such cells that are adjacent to one another are connected together, resulting in a constitution for which the desired electrical power can be extracted.

In the present invention, a membrane-electrode assembly that has high heat resistance and chemical resistance and moreover functions stably even at high temperature is used, and hence a polymer electrolyte fuel cell that can cope with high-temperature operation can be provided, and furthermore a direct methanol type fuel cell can be provided.

### PREFERRED EMBODIMENTS

Following is a description of the present invention through examples; however, the present invention is not limited by these examples. Note that, regarding the compounds, solvents and so on used, commercially available ones were used as is. The evaluation methods and the manufacture of the proton-conductive membrane were as follows.

### (1) Evaluation of state of adhesion

The membrane after joining was heated for 24 hours at 140°C in an oven. Regarding the evaluation after the heating, through visual observation and bending sensory tests, the state of the joining between the electrodes and the membrane was carried out through sensory tests, and evaluation was carried out using the following criteria.
○: Membrane-electrode assembly has a good state of adhesion with no peeling etc.
×: Electrodes and membrane peel away from one another.

### (2) Evaluation of power generating performance

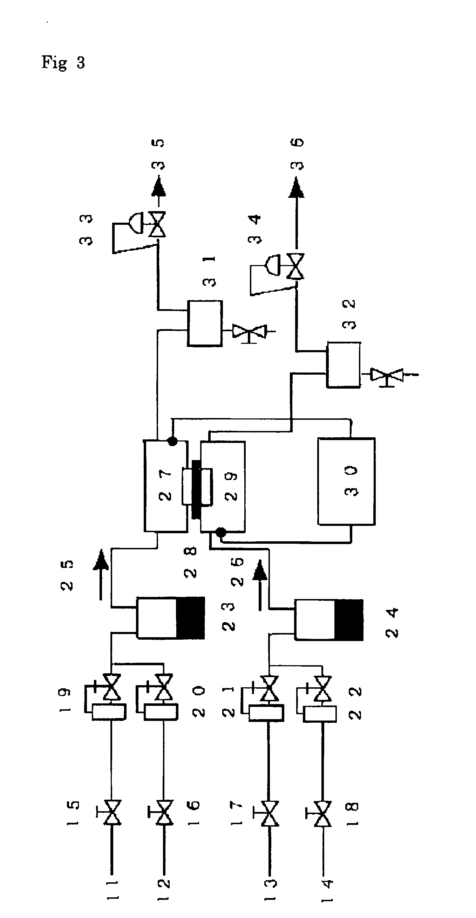

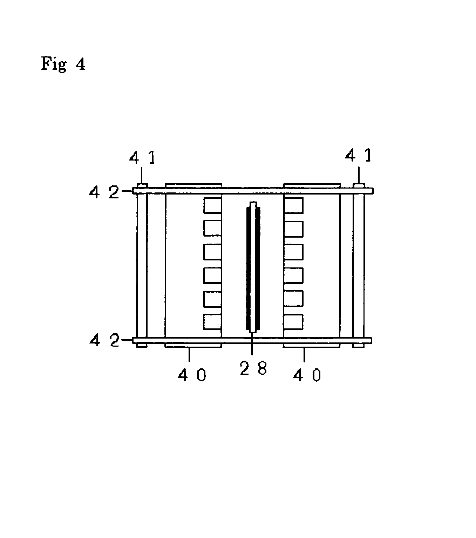

Taking the membrane-electrode assembly sample of the example or comparative example, and using a fuel cell unit cell (made by Electro-Chem-Technic), as shown in Fig. 4, a separator 40 and a collector plate 41 were disposed on each side of the membrane-electrode assembly 28, and tightening was carried out at a torque of 15 kg·cm using bolts 42, thus manufacturing a unit cell fuel cell. The power generating performance of the fuel cell constituted in this way was evaluated with the apparatus shown in Fig. 3 using an electronic load device ('890B' made by Scribner Associates, Inc, USA) and a gas supplying apparatus ('FC-GAS-1' made by Toyo Corporation). The evaluation cell, which comprises an anode 27 and a cathode 29, was a high-temperature cell for which the inside of the apparatus is pressurized at 100°C or more, hydrogen gas 11 and oxygen gas 13 could be diluted with nitrogen gas 12 and 14, bubblers 23 and 24 and the piping were made to be a system that can be varied at will through a temperature controller, and the gas discharged from the cell was released via humidifying traps 31 and 32. The cell temperature was varied from room temperature to 160°C, and the power generating performance of the cell using the membrane-electrode assembly 28 of the present invention was evaluated at each temperature. Regarding the evaluation, the cell and the electronic load device 30 were connected together, resistance was gradually applied, the power output (I-V characteristic) of the cell itself was measured, and the maximum power output and the current density were measured. The measurement values at 140°C were shown as representative values. At 140°C, the measurements were carried out with the inside of the measurement bath made to be in a pressurized state (5 atmospheres). The gas flow rates were 500ml/min for both the hydrogen and the oxygen.

### (3) Manufacture of proton-conductive membrane

7g of 1,8-bis(triethoxysilyl)octane (made by Gelest Inc.) and 3g of 3-(trihydroxysilyl)-1-propanesulfonic acid (made by Gelest Inc.) were dissolved in 15g of isopropyl alcohol. Note that the 3-(trihydroxysilyl)-1-propanesulfonic acid made by Gelest Inc. is available as an approximately 33% aqueous solution, but here this was concentrated under reduced pressure, and then used as a solid. The above solution was poured into a polystyrene petri dish of inside diameter 9cm (made by Yamamoto Seisakusyo). The petri dish was moved into a humidified vessel at 60°C, and water vapor generated at 70°C was introduced; after heating for 12 hours, a colorless transparent membrane was obtained. The membrane was flat, the mean thickness thereof was 200µm, and the proton conductivity was 5.0×10⁻²S/cm at 80°C and 95%RH.

In all of the following examples, a membrane-electrode assembly sample was manufactured using the above sample as the proton-conductive membrane.

### Example 1

A liquid of 0.5g of tetraethoxy silane (made by Shin-Etsu Chemical Co., Ltd.), 0.93g of phosphotungstic acid 29-hydrate (made by Wako Pure Chemical Industries, Ltd.) and 3.0g of isopropanol (made by Wako Pure Chemical Industries, Ltd.) mixed together was prepared. This liquid was applied using a bar coating method (bar coater #6) onto one face of a proton-conductive membrane that had been manufactured using the method described above. Within 1 minute after the application, a gas diffusion electrode having an area of 5×5cm² and a supported platinum amount of 1mg/cm² (made by E-TEK Div. of De Nora N.A., Inc., USA) was stuck on. This process was also carried out on the other face. The assembly thus obtained was pressed at room temperature at 2.0N/cm² using a press (made by Toyo Seiki Seisaku-Sho, Ltd.). The pressing was continued for 2 hours in this state, and then the temperature was raised to 160°C, and the pressing was continued for a further 3 hours.

Using a fuel cell unit cell (made by Electro-Chem-Technic), a separator and a collector plate were disposed on each side of the membrane-electrode assembly obtained, and tightening was carried out at a torque of 15kg·cm using bolts, thus manufacturing a unit cell.

The performance of the solid polymer electrolyte type fuel cell constituted in this way was evaluated using the evaluation method described above. The evaluation temperature was made to be 0 to 160°C, and in the case of 100°C and above, pressurization was carried out to the saturated water vapor pressure. Moreover, regarding the gases, oxygen and hydrogen were used, and the gas flow rate was made to be 500ml/min for both the hydrogen and the oxygen. As representative values for the evaluation of the membrane-electrode assembly, the maximum power output and the limiting current density under 140°C saturated water vapor are shown in Table 1 (hereinafter, these representative values are shown for all of the evaluation results).

### Example 2

A membrane-electrode assembly was obtained as in Example 1, except that 0.50g of methyl triethoxy silane (made by Shin-Etsu Chemical Co., Ltd.) was used instead of the tetraethoxy silane.

Using this membrane-electrode assembly, an evaluation cell was manufactured as in Example 1, and evaluation was carried out. The results are shown in Table 1.

### Example 3

A membrane-electrode assembly was obtained as in Example 1, except that 0.84g of 1,8-bis(triethoxysilyl)octane (made by Gelest Inc.) was used instead of the tetraethoxy silane.

Using this membrane-electrode assembly, an evaluation cell was manufactured as in Example 1, and evaluation was carried out. The results are shown in Table 1.

### Example 4

A membrane-electrode assembly was obtained as in Example 1, except that a solution of 0.84g of 1,8-bis(triethoxysilyl)octane (made by Gelest Inc.), 0.71g of phosphotungstic acid (made by Wako Pure Chemical Industries, Ltd.), 3.0g of isopropanol (made by Wako Pure Chemical Industries, Ltd.) and 0.8g of water mixed together was used.

Using this membrane-electrode assembly, an evaluation cell was manufactured as in Example 1, and evaluation was carried out. The results are shown in Table 1.

### Example 5

A membrane-electrode assembly was obtained as in Example 1, except that 0.84g of 1,8-bis(triethoxysilyl)octane (made by Gelest Inc.) was used instead of the tetraethoxy silane, and 0.93g of phosphomolybdic acid (made by Wako Pure Chemical Industries, Ltd.) was used instead of the phosphotungstic acid 29-hydrate.

Using this membrane-electrode assembly, an evaluation cell was manufactured as in Example 1, and evaluation was carried out. The results are shown in Table 1.

### Example 6

A membrane-electrode assembly was obtained as in Example 3, except that after sticking the proton-conductive membrane and the electrode together and carrying out pressing for 2 hours at 2.0N/cm² at room temperature, rough curing was carried out under humidifying conditions (relative humidity 80%) for 12 hours at 20°C, and then curing was carried out under humidifying conditions (relative humidity 80%) at 60°C.

Using this membrane-electrode assembly, an evaluation cell was manufactured as in Example 1, and evaluation was carried out. The results are shown in Table 1.

### Example 7

A membrane-electrode assembly was obtained as in Example 5, except that after sticking the proton-conductive membrane and the electrode together and carrying out pressing for 2 hours at 2.0N/cm² at room temperature, the membrane-electrode assembly was put into a constant-temperature constant-humidity bath at 80°C and 95% RH for 12 hours.

Using this membrane-electrode assembly, an evaluation cell was manufactured as in Example 1, and evaluation was carried out. The results are shown in Table 1.

### Example 8

A membrane-electrode assembly was obtained as in Example 3, except that 1.6g of 3-(trihydroxysilyl)-1-propanesulfonic acid 33% aqueous solution (made by Gelest Inc.) was used instead of the phosphotungstic acid.

Using this membrane-electrode assembly, an evaluation cell was manufactured as in Example 1, and evaluation was carried out. The results are shown in Table 1.

### Example 9

A membrane-electrode assembly was obtained as in Example 8, except that 0.50g of tetraethoxy silane was used instead of the 1,8-bis(triethoxysilyl)octane.

Using this membrane-electrode assembly, an evaluation cell was manufactured as in Example 1, and evaluation was carried out. The results are shown in Table 1.

### Example 10

A membrane-electrode assembly was obtained as in Example 3, except that 5.0g of 3-(trihydroxysilyl)-1-propanesulfonic acid 33% aqueous solution (made by Gelest Inc.) was used instead of the mixture of the 1,8-bis(triethoxysilyl)octane and the phosphotungstic acid.

Using this membrane-electrode assembly, an evaluation cell was manufactured as in Example 1, and evaluation was carried out. The results are shown in Table 1.

### Comparative Example 1

10g of commercially available ion exchange resin solution (Nafion^{®} perfluorinated ion exchange resin, made by Aldrich) was stirred vigorously in isopropanol, thus preparing a suspension. The suspension was applied onto both faces of a proton-conductive membrane, gas diffusion electrodes having a supported platinum amount of 1mg/cm² were stuck on, and a heating process was carried out as in Example 1, thus preparing a membrane-electrode assembly. Using the evaluation method described earlier, the power generating performance of the membrane-electrode assembly obtained was evaluated. The results are shown in Table 1.

**Table 1**

| | Formation of joining parts between catalyst-supporting electrodes and proton-conductive membrane | | Evaluation of membrane-electrode assembly | | |
|---|---|---|---|---|---|
| | Composition of material forming three-dimensionally crosslinked structure | Humidifying conditions | Maximum power output (mW/cm²) | Limiting current density (A/cm²) | State of adhesion |
| Example 1 | Tetraethoxy silane / phosphotungstic acid | - | 5 | 0.05 | ○ |
| Example 2 | Methyl triethoxy silane / phosphotungstic acid | - | 5 | 0.05 | ○ |
| Example 3 | 1,8-bis(triethoxysilyl)octane / phosphotungstic acid | - | 10 | 0.07 | ○ |
| Example 4 | 1,8-bis(triethoxysilyl)octane / phosphotungstic acid / water | - | 25 | 0.15 | ○ |
| Example 5 | 1,8-bis(triethoxysilyl)octane / phosphomolybdic acid | - | 9 | 0.06 | ○ |
| Example 6 | 1,8-bis(triethoxysiiyl)octane / phosphotungstic acid | 20°C,80%RH,12hr 60°C,80%RH,12hr | 15 | 0.10 | ○ |
| Example 7 | 1,8-bis(triethoxysilvl)octane / phosphomolybdic acid | 80°C,95%RH,12hr | 12 | 0.09 | ○ |
| Example 8 | 1,8-bis(triethoxysilyl)octane / 3-(trihydroxysilyl)-1-propanesulfonic acid / water | - | 27 | 0.18 | ○ |
| Example 9 | Tetraethoxy silane / 3-(trihydroxysilyl)-1-propanesulfonic acid / water | - | 30 | 0.20 | ○ |
| Example 10 | 3-(trihydroxysilyl)-1-propanesulfonic acid / water | - | 38 | 0.25 | ○ |
| Example 11 | 1,8-bis(triethoxysilyl)octane / phosphotungstic acid / water | - | 30 | 0.20 | ○ |
| Example 12 | Tetraethoxy silane / 3-(trihydroxysilyl)-1-propanesulfonic acid / water | 80°C,95%RH,12hr | 35 | 0.23 | ○ |
| Example 13 | 1,8-bis(triethoxysilyl)octane / 3-(trihydroxysilyl)-1-propanesulfonic acid | - | 25 | 0.15 | ○ |
| Example 14 | 1,8-bis(triethoxysilyl)octane / 3-(trihydroxysilyl)-1-propanesulfonic acid / phosphotungstic acid | - | 64 | 0.33 | ○ |
| Comparative Example 1 | Commercially available proton-conductive resin (Nafion®) used | - | 1^{*1} | 0.02^{*1} | × |
| Comparative Example 2 | Commercially available proton-conductive resin (Nafion®) used | - | 5^{*2} | 0.05^{*2} | × |

| | | | | | |
|---|---|---|---|---|---|
| *1: Gas diffusion electrodes having catalyst supported thereon used *2: Gas diffusion electrodes having no catalyst used | | | | | |

### Example 11

Gas diffusion electrodes having an area of 5×5cm² and a supported platinum amount of 1mg/cm² (made by E-TEK Div. of De Nora N.A., Inc., USA) were immersed in a liquid of 0.84g of 1,8-bis(triethoxysilyl)octane, 3g of isopropyl alcohol, 0.71g of phosphotungstic acid and 0.08g of water mixed together, and after pulling the gas diffusion electrodes out of the liquid, curing was carried out under humidifying conditions for 12 hours at 60°C in an oven (pretreatment). A liquid of 0.84g of 1,8-bis(triethoxysilyl)octane, 3g of isopropyl alcohol, 0.71g of phosphotungstic acid and 0.08g of water mixed together (solid component concentration approximately 33.48wt%) was applied onto a proton-conductive membrane as described earlier, the proton-conductive membrane was inserted between the above-mentioned pretreated gas diffusion electrodes, and pressing was carried out for 10 minutes at a temperature of 80°C at 25kg/cm² using a press (30t hydraulic press made by Toyo Seiki Seisaku-Sho, Ltd.), thus obtaining a membrane-electrode assembly.

Using this membrane-electrode assembly, an evaluation cell was manufactured as in Example 1, and evaluation was carried out. The results were that the maximum power output was 30mW/cm², the limiting current density was 0.2A/cm², and the state of adhesion was good.

### Example 12

5.0g of platinum-catalyst-supporting carbon black (TEC10A30E; made by Tanaka Kikinzoku Kogyo K.K. ), 5.0g of tetraethoxy silane and 4.0g of 3-(trihydroxysilyl)-1-propanesulfonic acid 33% aqueous solution were dispersed uniformly in 15g of isopropyl alcohol using a homogenizer. The resulting liquid was applied onto both faces of a proton-conductive membrane using a roll coater to a thickness of 30µm. TGP-H-120 carbon paper (made by Toray Industries, Inc.) was stuck onto the membrane onto which the liquid had been applied, pressing was carried out for 2 hours at a pressure of 5.0N/cm² using a press, and then the assembly was put into a constant-temperature constant-humidity bath at 80°C and 95% RH for 12 hours, thus obtaining a membrane-electrode assembly.

Using this membrane-electrode assembly, an evaluation cell was manufactured as in Example 1, and evaluation was carried out. The results were that the maximum power output was 35mW/cm², the limiting current density was 0.23A/cm², and the state of adhesion was good.

### Example 13

A solution of 5g of carbon black having a specific surface area of 250m²/g (Vulcan XC72R made by Cabot Corporation), 7g of 1,8-bis(triethoxysilyl)octane (made by Gelest Inc.) and 3g of 3-(trihydroxysilyl)-1-propanesulfonic acid (made by Gelest Inc.) dispersed uniformly in 15g of isopropyl alcohol was applied onto both faces of a proton-conductive membrane to a thickness of 100µm. The membrane was heated for 30 minutes at 80°C, thus crosslinking the above-mentioned silyl compounds to a high degree. Next, an operation of further increasing the degree of crosslinking was carried out by heating the cured material for 2 hours at 100°C under reduced pressure in a vacuum heating apparatus, whereby a three-dimensionally crosslinked cured material was formed on both faces of the proton-conductive membrane.

The whole was further immersed for 1 hour in an ethanol solution of chloroplatinic acid (Wako Pure Chemical Industries, Ltd. special grade) (5wt% solution), and then reduction was carried out for 2 hours at 150°C in a mixed gas of 10% hydrogen and 90% argon, thus fixing platinum onto the cured material.

The sample (membrane-electrode assembly) obtained through the above operations was inserted between gas diffusion electrodes (carbon paper TGP-H-120, made by Toray Industries, Inc.), and the power generating performance and the proton conductivity were evaluated. The results were that the maximum power output was 25mW/cm², the limiting current density was 0.15A/cm², and the state of adhesion was good.

### Example 14

A solution of 5g of carbon black having a specific surface area of 250m²/g (Vulcan XC72R made by Cabot Corporation), 7g of 1,8-bis(triethoxysilyl)octane (made by Gelest Inc.), 3g of 3-(trihydroxysilyl)-1-propanesulfonic acid (made by Gelest Inc.), and also 10g of phosphotungstic acid (made by Wako Pure Chemical Industries, Ltd.) dispersed uniformly in 15g of isopropyl alcohol was applied onto both faces of a proton-conductive membrane to a thickness of 100µm. The membrane was heated for 30 minutes at 80°C, thus crosslinking the above-mentioned silyl compounds to a high degree. Next, an operation of further increasing the degree of crosslinking was carried out by heating the cured material at 100°C under reduced pressure in a vacuum heating apparatus. The cured material was then immersed for 1 hour in hot water at 80°C, thus leaching out excess phosphotungstic acid from the cured material. After this, drying was further carried out for 1 hour in a vacuum heating apparatus at 100°C, whereby a three-dimensionally crosslinked cured material having a porous structure was formed on both faces of the proton-conductive membrane.

The whole was further immersed for 1 hour in an ethanol solution of chloroplatinic acid (Wako Pure Chemical Industries, Ltd. special grade) (5wt% solution), and then reduction was carried out for 2 hours at 150°C in a mixed gas of 10% hydrogen and 90% argon, thus fixing platinum onto the porous cured material.

The sample (membrane-electrode assembly) obtained through the above operations was inserted between gas diffusion electrodes (carbon paper TGP-H-120, made by Toray Industries, Inc.), and the power generating performance and the proton conductivity were evaluated. The results were that the maximum power output was 64mW/cm², the limiting current density was 0.33A/cm², and the state of adhesion was good.

### Comparative Example 2

5g of platinum-catalyst-supporting carbon black (TEC10A30E; made by Tanaka Kikinzoku Kogyo K.K.)and 10g of commercially available ion exchange resin solution (Nafion^{®} perfluorinated ion exchange resin, made by Aldrich) were stirred vigorously in isopropanol, thus preparing a suspension. The suspension was applied onto both faces of a proton-conductive membrane, and heating was further carried out to 80°C to evaporate off the isopropanol solvent, thus preparing a membrane-electrode assembly. The power generating performance of the membrane-electrode assembly obtained was evaluated using the evaluation method described earlier. The results were that the maximum power output was 5mW/cm², and the state of adhesion was that peeling occurred.

From the results for the Examples, it was demonstrated that, by using a membrane-electrode assembly of the present invention, stable power generation is possible at 140°C. In contrast, with a membrane-electrode assembly joined together using a conventionally used fluororesin type non-crosslinked material, clear degradation is exhibited during the test period (3 hours), and hence it is apparent that stable use is not possible.

The reason that the overall power generation output was low is that the proton-conductive membrane was thick, and no fundamental problem is involved.

### INDUSTRIAL APPLICABILITY

With the present invention, by forming a membrane-electrode assembly using a thermally stable three-dimensionally crosslinked structure, it has been possible to realize a membrane-electrode assembly that exhibits a stable performance even at high temperature. If this membrane-electrode assembly and a heat-resistant proton-conductive membrane are combined, then a high-efficiency polymer electrolyte fuel cell can be realized. Moreover, if high-temperature operation is possible, then the industrial value is extremely high, for example it becomes possible to raise not only the power efficiency but also the overall efficiency through cogeneration of heat and power, to simplify the cooling apparatus, to reduce catalyst poisoning, and to change the type of catalyst metal.

## Claims

1. A membrane-electrode assembly made by joining gas diffusion electrodes to both faces of a proton-conductive membrane,
**characterized in that** membrane-electrode joining parts where the proton-conductive membrane and the gas diffusion electrodes are joined together contain a three-dimensionally crosslinked structure that comprises metal-oxygen bonds and is formed through a sol-gel reaction, and said three-dimensionally crosslinked structure contains a proton conductivity-bestowing material containing a compound represented by undermentioned formula (1). 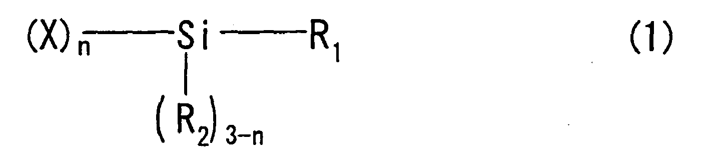 (In the formula; X represents a -O- bond that is involved in crosslinking or an OH group, R₁ represents any organic group containing an acid group, R₂ represents an alkyl group having 4 or fewer carbon atoms, n is an integer from 1 to 3, and at least one of the X's is a -O- bond that is involved in crosslinking.)

2. The membrane-electrode assembly according to claim 1, **characterized in that** said gas diffusion electrodes have a precious metal catalyst supported on surfaces thereof in advance.

3. The membrane-electrode assembly according to claim 1, **characterized in that** said membrane-electrode joining parts further contain carbon fine particles having a precious metal catalyst supported thereon, in addition to the three-dimensionally crosslinked structure.

4. The membrane-electrode assembly according to one of claims 1 through 3, **characterized in that** R₁ in formula (1) contains either acid group selected from a sulfonic acid group or a phosphonic acid group.

5. The membrane-electrode assembly according to claim 4, **characterized in that** the compound of formula (1) is a structure represented by undermentioned formula (2). 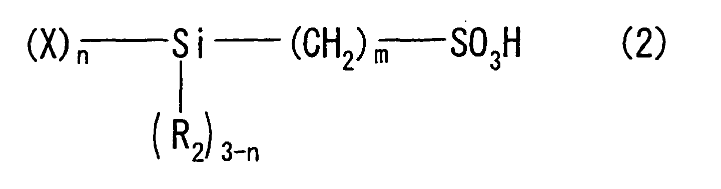 (In the formula, X represents a -O- bond that is involved in crosslinking or an OH group, R₂ represents an alkyl group having 4 or fewer carbon atoms, m is an integer from 1 to 20, n is an integer from 1 to 3, and at least one of the X's is a -O- bond that is involved in crosslinking.)

6. The membrane-electrode assembly according to one of claims 1 through 5, **characterized in that** said metal-oxygen bonds are silicon-oxygen bonds.

7. The membrane-electrode assembly according to one of claims 1 through 6, **characterized in that** said three-dimensionally crosslinked structure contains a structure represented by undermentioned formula (3).
Si(X) ₄ (3)
(In the formula, X represents a -O- bond that is involved in crosslinking or an OH group, and at least one of the X's is a -O- bond that is involved in crosslinking.)

8. The membrane-electrode assembly according to one of claims 1 through 6, **characterized in that** said three-dimensionally crosslinked structure contains a structure represented by undermentioned formula (4).
Si(X)ₙ(R₂)₄₋ₙ (4)
(In the formula, X represents a -O- bond that is involved in crosslinking or an OH group, R₂ represents an alkyl group having 20 or fewer carbon atoms, n is an integer from 1 to 3, and at least one of the X's is a -O- bond that is involved in crosslinking. In the case that n is 1 or 2, the R₂'s may be a mixture of different alkyl groups.)

9. The membrane-electrode assembly according to one of claims 1 through 6, **characterized in that** said three-dimensionally crosslinked structure contains a structure represented by undermentioned formula (5). 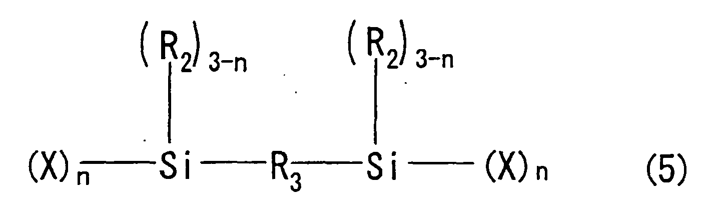 (In the formula, X represents a -O- bond that is involved in crosslinking or an OH group, R₂ represents an alkyl group having 4 or fewer carbon atoms, R₃ represents a hydrocarbon having 30 or fewer carbon atoms, n is an integer from 1 to 3, and at least one of the X's is a -O- bond that is involved in crosslinking.)

10. The membrane-electrode assembly according to one of claims 1 through 9, **characterized in that** said proton-conductive membrane contains a structure that is three-dimensionally crosslinked through silicon-oxygen bonds.

11. A method of manufacturing the membrane-electrode assembly according to one of claims 1, 2, and 4 through 10, **characterized by** comprising a first step of applying a liquid containing a crosslinkable monomer containing silicon onto at least one face of the proton-conductive membrane, a second step of sticking a gas diffusion electrode having a catalyst supported thereon onto the proton-conductive membrane onto which the liquid has been applied, and a third step of curing the liquid, and said
crosslinkable monomer contains a compound represented by undermentioned formula (6). 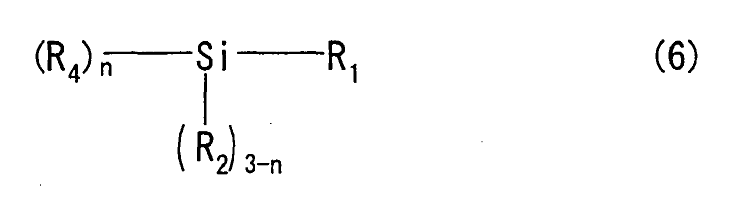 (In the formula, R₄ represents a Cl, OCH₃, OC₂H₅, OC₆H₅, OH or OCOCH₃ group, R₁ represents any organic group containing an acid group, R₂ represents an alkyl group having 4 or fewer carbon atoms, and n is an integer from 1 to 3.)

12. A method of manufacturing the membrane-electrode assembly according to one of claims 1, and 3 through 10, **characterized by** comprising a first step of applying a liquid containing a crosslinkable monomer containing silicon and carbon fine particles having a precious metal catalyst supported thereon onto at least one face of the proton-conductive membrane, a second step of sticking a gas diffusion electrode onto the proton-conductive membrane onto which the liquid has been applied, and a third step of curing the liquid and said
crosslinkable monomer contains a compound represented by undermentioned formula (6). 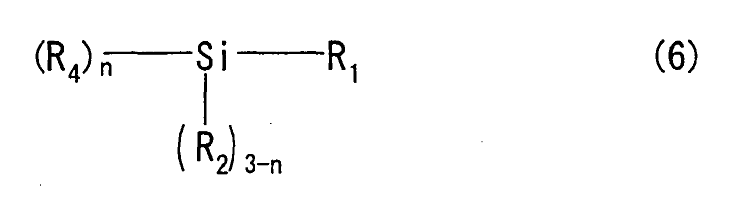 (In the formula, R₄ represents a Cl, OCH₃, OC₂H₅, OC₆H₅, OH or OCOCH₃ group, R₁ represents any organic group containing an acid group, R₂ represents an alkyl group having 4 or fewer carbon atoms, and n is an integer from 1 to 3.)

13. The method of manufacturing a membrane-electrode assembly according to claim 11 or 12 **characterized in that** R₁ in formula (6) contains either acid group selected from a sulfonic acid group or a phosphonic acid group.

14. The method of manufacturing a membrane-electrode assembly according to claim 13, **characterized in that** the compound of formula (6) is a compound represented by undermentioned formula (7). 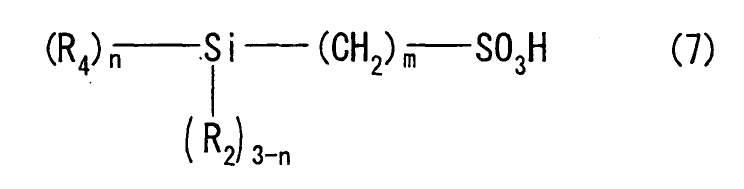 (In the formula, R₄ represents a Cl, OCH₃, OC₂H₅, OC₆H₅, OH or OCOCH₃ group, R₂ represents an alkyl group having 4 or fewer carbon atoms, m is an integer from 1 to 20, and n is an integer from 1 to 3.)

15. The method of manufacturing a membrane-electrode assembly according to one of claims 11 through 14, **characterized in that** said crosslinkable monomer contains a compound represented by undermentioned formula (8).
Si(R₄)₄ (8)
(In the formula, R₄ represents a Cl, OCH₃, OC₂H₅, OC₆H₅, OH or OCOCH₃ group.)

16. The method of manufacturing a membrane-electrode assembly according to one of claims 11 through 14, **characterized in that** said crosslinkable monomer contains a compound represented by undermentioned formula (9).
Si(R₄)ₙ (R₂)₄₋ₙ (9)
(In the formula, R₄ represents a Cl, OCH₃, OC₂H₅, OC₆H₅, OH or OCOCH₃ group, R₂ represents an alkyl group having 20 or fewer carbon atoms, and n is an integer from 1 to 3. In the case that n is 1 or 2, the R₂'s may be a mixture of different alkyl groups.)

17. The method of manufacturing a membrane-electrode assembly according to one of claims 11 through 14, **characterized in that** said crosslinkable monomer contains a compound represented by undermentioned formula (10). 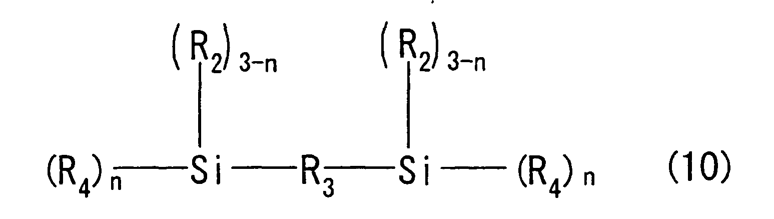 (In the formula, R₄ represents a Cl, OCH₃, OC₂H₅, OC₆H₅, OH or OCOCH₃ group, R₂ represents an alkyl group having 4 or fewer carbon atoms, R₃ represents a hydrocarbon having 30 or fewer carbon atoms, and n is an integer from 1 to 3.)

18. The method of manufacturing a membrane-electrode assembly according to claim 12, **characterized in that** the liquid applied in said first step has a solid component concentration, i.e. the total concentration of the crosslinkable monomer containing silicon and the precious-metal-catalyst-supporting carbon fine particles, of at least 5wt%.

19. The method of manufacturing a membrane-electrode assembly according to one of claims 11 through 18, **characterized in that** the liquid applied in said first step contains water.

20. The method of manufacturing a membrane-electrode assembly according to one of claims 11 through 19 **characterized in that** said second step is carried out by hot pressing at a temperature of at least 20°C.

21. The method of manufacturing a membrane-electrode assembly according to claim 20, **characterized in that** said hot pressing is carried out at a pressure of at least 0.5N/cm².

22. The method of manufacturing a membrane-electrode assembly according one of claims 11 through 21, **characterized in that** said third step is carried out at a temperature of 50 to 300°C

23. The method of manufacturing a membrane-electrode assembly according to one of claims 11 through 21, **characterized in that** said third step comprises a preliminary curing step of carrying out preheating at normal temperature, followed by a main curing step of raising the temperature to 20 to 200°C and thus curing.

24. The method of manufacturing a membrane-electrode assembly according to one of claims 11 through 21,**characterized in that** said third step is carried out under humidifying conditions with a relative humidity of at least 50%.

25. A polymer electrolyte fuel cell, using the membrane-electrode assembly according to one of claims 1 through 10.

## Patentansprüche

1. Membran-Elektroden-Anordnung, die durch Verbinden von Gasdiffusionselektroden mit beiden Flächen einer protonenleitenden Membran hergestellt worden ist,
**dadurch gekennzeichnet, dass** die Membran-Elektroden-Verbindungsteile, bei denen die protonenleitende Membran und die Gasdiffusionselektroden miteinander verbunden sind, eine dreidimensional vernetzte Struktur enthalten, die Metall-Sauerstoff-Bindungen umfasst und durch eine Sol-Gel-Reaktion gebildet worden ist, und die dreidimensional vernetzte Struktur ein eine Protonenleitfähigkeit verleihendes Material enthält, das eine Verbindung enthält, die durch die nachstehende Formel (1) dargestellt ist. 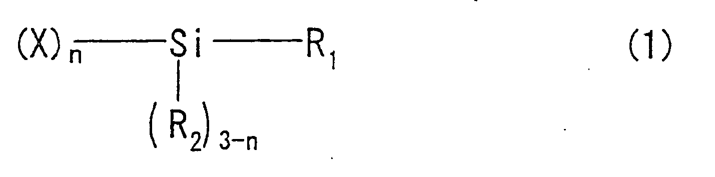 (In der Formel stellt X eine -O-Bindung, die an der Vernetzung beteiligt ist, oder eine OH-Gruppe dar, R₁ stellt jedwede organische Gruppe dar, die eine Säuregruppe enthält, R₂ stellt eine Alkylgruppe mit 4 oder weniger Kohlenstoffatomen dar, n ist eine ganze Zahl von 1 bis 3 und mindestens eines der X ist eine -O-Bindung, die an der Vernetzung beteiligt ist.)

2. Membran-Elektroden-Anordnung nach Anspruch 1, **dadurch gekennzeichnet, dass** die Gasdiffusionselektroden einen im Vorhinein auf Oberflächen davon aufgebrachten Edelmetallkatalysator aufweisen.

3. Membran-Elektroden-Anordnung nach Anspruch 1, **dadurch gekennzeichnet, dass** die Membran-Elektroden-Verbindungsteile zusätzlich zu der dreidimensional vernetzten Struktur ferner feine Kohlenstoffteilchen enthalten, die einen darauf aufgebrachten Edelmetallkatalysator enthalten.

4. Membran-Elektroden-Anordnung nach einem der Ansprüche 1 bis 3, **dadurch gekennzeichnet, dass** R₁ in der Formel (1) eine Säuregruppe enthält, die aus einer Sulfonsäuregruppe oder einer Phosphonsäuregruppe ausgewählt ist.

5. Membran-Elektroden-Anordnung nach Anspruch 4, **dadurch gekennzeichnet, dass** die Verbindung der Formel (1) eine Struktur ist, die durch die nachstehende Formel (2) dargestellt ist. 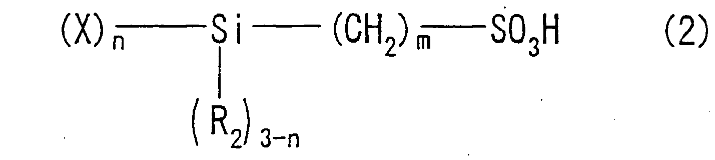 (In der Formel stellt X eine -O-Bindung, die an der Vernetzung beteiligt ist, oder eine OH-Gruppe dar, R₂ stellt eine Alkylgruppe mit 4 oder weniger Kohlenstoffatomen dar, m ist eine ganze Zahl von 1 bis 20, n ist eine ganze Zahl von 1 bis 3 und mindestens eines der X ist eine -O-Bindung, die an der Vernetzung beteiligt ist.)

6. Membran-Elektroden-Anordnung nach einem der Ansprüche 1 bis 5, **dadurch gekennzeichnet, dass** die Metall-Sauerstoff-Bindungen Silizium-Sauerstoff-Bindungen sind.

7. Membran-Elektroden-Anordnung nach einem der Ansprüche 1 bis 6, **dadurch gekennzeichnet, dass** die dreidimensional vernetzte Struktur eine Struktur enthält, die durch die nachstehende Formel (3) dargestellt ist.
Si(X)₄ (3)
(In der Formel stellt X eine -O-Bindung, die an der Vernetzung beteiligt ist, oder eine OH-Gruppe dar und mindestens eines der X ist eine -O-Bindung, die an der Vernetzung beteiligt ist.)

8. Membran-Elektroden-Anordnung nach einem der Ansprüche 1 bis 6, **dadurch gekennzeichnet, dass** die dreidimensional vernetzte Struktur eine Struktur enthält, die durch die nachstehende Formel (4) dargestellt ist.
Si(X)ₙ(R₂)₄₋ₙ (4)
(In der Formel stellt X eine -O-Bindung, die an der Vernetzung beteiligt ist, oder eine OH-Gruppe dar, R₂ stellt eine Alkylgruppe mit 20 oder weniger Kohlenstoffatomen dar, n ist eine ganze Zahl von 1 bis 3 und mindestens eines der X ist eine -O-Bindung, die an der Vernetzung beteiligt ist. In dem Fall, dass n 1 oder 2 ist, können die R₂ ein Gemisch von verschiedenen Alkylgruppen sein.)

9. Membran-Elektroden-Anordnung nach einem der Ansprüche 1 bis 6, **dadurch gekennzeichnet, dass** die dreidimensional vernetzte Struktur eine Struktur enthält, die durch die nachstehende Formel (5) dargestellt ist. 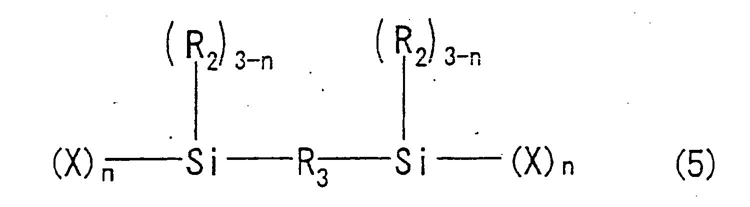 (In der Formel stellt X eine -O-Bindung, die an der Vernetzung beteiligt ist, oder eine OH-Gruppe dar, R₂ stellt eine Alkylgruppe mit 4 oder weniger Kohlenstoffatomen dar, R₃ stellt einen Kohlenwasserstoff mit 30 oder weniger Kohlenstoffatomen dar, n ist eine ganze Zahl von 1 bis 3 und mindestens eines der X ist eine -O-Bindung, die an der Vernetzung beteiligt ist.)

10. Membran-Elektroden-Anordnung nach einem der Ansprüche 1 bis 9, **dadurch gekennzeichnet, dass** die protonenleitende Membran eine Struktur enthält, die durch Silizium-Sauerstoff-Bindungen dreidimensional vernetzt ist.

11. Verfahren zur Herstellung der Membran-Elektroden-Anordnung nach einem der Ansprüche 1, 2 und 4 bis 10, **dadurch gekennzeichnet, dass** es einen ersten Schritt des Aufbringens einer Flüssigkeit, die ein Silizium-enthaltendes vernetzbares Monomer enthält, auf mindestens eine Fläche der protonenleitenden Membran, einen zweiten Schritt des Klebens einer Gasdiffusionselektrode mit einem darauf aufgebrachten Katalysator auf die protonenleitende Membran, auf der die Flüssigkeit aufgebracht worden ist, und einen dritten Schritt des Härtens der Flüssigkeit umfasst, und das vernetzbare Monomer eine Verbindung enthält, die durch die nachstehende Formel (6) dargestellt ist. 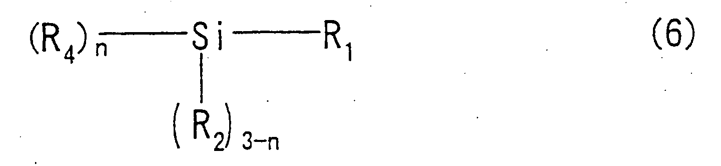 (In der Formel stellt R₄ eine Cl-, OCH₃-, OC₂H₅-, OC₆H₅-, OH- oder OCOCH₃-Gruppe dar, R₁ stellt eine organische Gruppe dar, die eine Säuregruppe enthält, R₂ stellt eine Alkylgruppe mit 4 oder weniger Kohlenstoffatomen dar und n ist eine ganze Zahl von 1 bis 3.)

12. Verfahren zur Herstellung der Membran-Elektroden-Anordnung nach einem der Ansprüche 1 und 3 bis 10, **dadurch gekennzeichnet, dass** es einen ersten Schritt des Aufbringens einer Flüssigkeit, die ein Silizium-enthaltendes vernetzbares Monomer und feine Kohlenstoffteilchen mit einem darauf aufgebrachten Edelmetallkatalysator enthält, auf mindestens eine Fläche der protonenleitenden Membran, einen zweiten Schritt des Klebens einer Gasdiffusionselektrode auf die protonenleitende Membran, auf der die Flüssigkeit aufgebracht worden ist, und einen dritten Schritt des Härtens der Flüssigkeit umfasst, und das vernetzbare Monomer eine Verbindung enthält, die durch die nachstehende Formel (6) dargestellt ist. 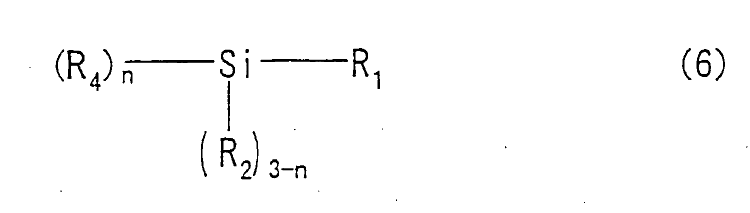 (In der Formel stellt R₄ eine Cl-, OCH₃-, OC₂H₅-, OC₆H₅-, OH- oder OCOCH₃-Gruppe dar, R₁ stellt eine organische Gruppe dar, die eine Säuregruppe enthält, R₂ stellt eine Alkylgruppe mit 4 oder weniger Kohlenstoffatomen dar und n ist eine ganze Zahl von 1 bis 3.)

13. Verfahren zur Herstellung einer Membran-Elektroden-Anordnung nach Anspruch 11 oder 12, **dadurch gekennzeichnet, dass** R₁ in der Formel (6) eine Säuregruppe enthält, die aus einer Sulfonsäuregruppe oder einer Phosphonsäuregruppe ausgewählt ist.

14. Verfahren zur Herstellung einer Membran-Elektroden-Anordnung nach Anspruch 13, **dadurch gekennzeichnet, dass** die Verbindung der Formel (6) eine Verbindung ist, die durch die nachstehende Formel (7) dargestellt ist. 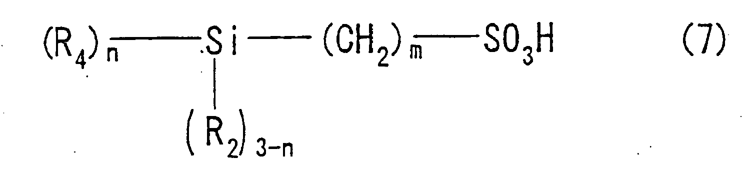 (In der Formel stellt R₄ eine Cl-, OCH₃-, OC₂H₅-, OC₆H₅-, OH- oder OCOCH₃-Gruppe dar, R₂ stellt eine Alkylgruppe mit 4 oder weniger Kohlenstoffatomen dar, m ist eine ganze Zahl von 1 bis 20 und n ist eine ganze Zahl von 1 bis 3.)

15. Verfahren zur Herstellung einer Membran-Elektroden-Anordnung nach einem der Ansprüche 11 bis 14, **dadurch gekennzeichnet, dass** das vernetzbare Monomer eine Verbindung enthält, die durch die nachstehende Formel (8) dargestellt ist.
Si(R₄)₄ (8)
(In der Formel stellt R₄ eine Cl-, OCH₃-, OC₂H₅-, OC₆H₅-, OH- oder OCOCH₃-Gruppe dar.)

16. Verfahren zur Herstellung einer Membran-Elektroden-Anordnung nach einem der Ansprüche 11 bis 14, **dadurch gekennzeichnet, dass** das vernetzbare Monomer eine Verbindung enthält, die durch die nachstehende Formel (9) dargestellt ist.
Si(R₄)ₙ(R2)₄₋ₙ (9)
(In der Formel stellt R₄ eine Cl-, OCH₃-, OC₂H₅-, OC₆H₅-, OH- oder OCOCH₃-Gruppe dar, R₂ stellt eine Alkylgruppe mit 20 oder weniger Kohlenstoffatomen dar und n ist eine ganze Zahl von 1 bis 3. In dem Fall, dass n 1 oder 2 ist, können die R₂ ein Gemisch von verschiedenen Alkylgruppen sein.)

17. Verfahren zur Herstellung einer Membran-Elektroden-Anordnung nach einem der Ansprüche 11 bis 14, **dadurch gekennzeichnet, dass** das vernetzbare Monomer eine Verbindung enthält, die durch die nachstehende Formel (10) dargestellt ist. 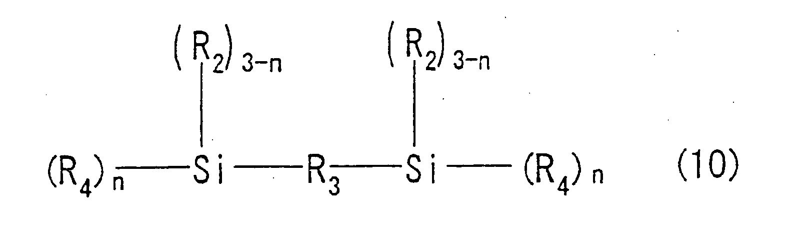 (In der Formel stellt R₄ eine Cl-, OCH₃-, OC₂H₅-, OC₆H₅-, OH- oder OCOCH₃-Gruppe dar, R₂ stellt eine Alkylgruppe mit 4 oder weniger Kohlenstoffatomen dar, R₃ stellt einen Kohlenwasserstoff mit 30 oder weniger Kohlenstoffatomen dar und n ist eine ganze Zahl von 1 bis 3.)

18. Verfahren zur Herstellung einer Membran-Elektroden-Anordnung nach Anspruch 12, **dadurch gekennzeichnet, dass** die Flüssigkeit, die in dem ersten Schritt aufgebracht wird, eine Feststoffkomponentenkonzentration, d.h. die Gesamtkonzentration des Silizium-enthaltenden vernetzbaren Monomers und der feinen Kohlenstoffteilchen, auf denen ein Edelmetallkatalysator aufgebracht ist, von mindestens 5 Gew.-% aufweist.

19. Verfahren zur Herstellung einer Membran-Elektroden-Anordnung nach einem der Ansprüche 11 bis 18, **dadurch gekennzeichnet, dass** die in dem ersten Schritt aufgebrachte Flüssigkeit Wasser enthält.

20. Verfahren zur Herstellung einer Membran-Elektroden-Anordnung nach einem der Ansprüche 11 bis 19, **dadurch gekennzeichnet, dass** der zweite Schritt durch Warmpressen bei einer Temperatur von mindestens 20°C durchgeführt wird.

21. Verfahren zur Herstellung einer Membran-Elektroden-Anordnung nach Anspruch 20, **dadurch gekennzeichnet, dass** das Warmpressen bei einem Druck von mindestens 0,5 N/cm² durchgeführt wird.

22. Verfahren zur Herstellung einer Membran-Elektroden-Anordnung nach einem der Ansprüche 11 bis 21, **dadurch gekennzeichnet, dass** der dritte Schritt bei einer Temperatur von 50 bis 300°C durchgeführt wird.

23. Verfahren zur Herstellung einer Membran-Elektroden-Anordnung nach einem der Ansprüche 11 bis 21, **dadurch gekennzeichnet, dass** der dritte Schritt einen Vorhärtungsschritt des Durchführens eines Vorwärmens bei Normaltemperatur, gefolgt von einem Haupthärtungsschritt des Erhöhens der Temperatur auf 20 bis 200 °C zum Härten umfasst.

24. Verfahren zur Herstellung einer Membran-Elektroden-Anordnung nach einem der Ansprüche 11 bis 23, **dadurch gekennzeichnet, dass** der dritte Schritt unter Feuchtigkeitsbedingungen mit einer relativen Feuchtigkeit von mindestens 50 % durchgeführt wird.

25. Polymerelektrolytbrennstoffzelle, bei der die Membran-Elektroden-Anordnung nach einem der Ansprüche 1 bis 10 eingesetzt wird.

## Revendications

1. Ensemble membrane-électrode élaboré par jonction d'électrodes à diffusion gazeuse sur les deux faces d'une membrane conductrice de protons, **caractérisé en ce que** les parties de jonction membrane-électrode où la membrane conductrice de protons et les électrodes à diffusion gazeuse sont joints contiennent une structure réticulée tridimensionnelle qui comprend des liaisons métal-oxygène et qui est formée par une réaction sol-gel, et où ladite structure réticulée tridimensionnelle contient un matériau permettant la conductivité protonique, contenant un composé représenté par la formule (1) ci-dessous. 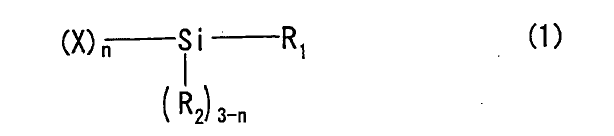 (Dans la formule, X représente une liaison -O- qui est impliquée dans la - réticulation ou un radical OH, R₁ représente tout radical organique contenant un radical acide, R₂ représente un radical alkyle ayant 4 atomes de carbone ou moins, n est un entier allant de 1 à 3, et au moins l'un des X est une liaison -O-qui est impliquée dans la réticulation.)

2. Ensemble membrane-électrode selon la revendication 1, **caractérisé en ce que** lesdites électrodes à diffusion gazeuse comprennent un catalyseur à métal précieux préalablement fixé sur leurs surfaces.

3. Ensemble membrane-électrode selon la revendication 1, **caractérisé en ce que** lesdites parties de jonction membrane-électrode contiennent en outre de fines particules de carbone présentant un catalyseur à métal précieux fixé sur celles-ci, en plus de la structure réticulée tridimensionnelle.

4. Ensemble membrane-électrode selon l'une des revendications 1 à 3, **caractérisé en ce que** R₁ dans la formule (1) contient un radical acide choisi parmi le radical acide sulfonique et le radical acide phosphonique.

5. Ensemble membrane-électrode selon la revendication 4, **caractérisé en ce que** le composé de formule (1) est une structure représentée par la formule (2) ci-dessous. 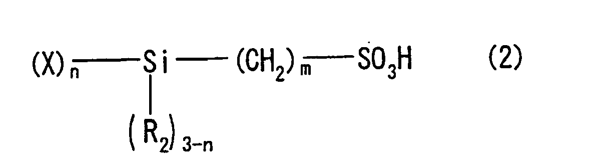 (Dans la formule, X représente une liaison -O- qui est impliquée dans la réticulation ou un radical OH, R₂ représente un radical alkyle ayant 4 atomes de carbone ou moins, m est entier allant de 1 à 20, n est un entier allant de 1 à 3, et au moins l'un des X est une liaison -O- qui est impliquée dans la réticulation.)

6. Ensemble membrane-électrode selon l'une des revendications 1 à 5, **caractérisé en ce que** lesdites liaisons métal-oxygène sont des liaisons silicium-oxygène.

7. Ensemble membrane-électrode selon l'une des revendications 1 à 6, **caractérisé en ce que** ladite structure réticulée tridimensionnelle contient une structure représentée par la formule (3) ci-dessous.
Si(X)₄ (3)
(Dans la formule, X représente une liaison -O- qui est impliquée dans la réticulation ou un radical OH, et au moins l'un des X est une liaison -O- qui est impliquée dans la réticulation.)

8. Ensemble membrane-électrode selon l'une des revendications 1 à 6, **caractérisé en ce que** ladite structure réticulée tridimensionnelle contient une structure représentée par la formule (4) ci-dessous.
Si(x)ₙ (R₂)₄₋ₙ (4)
(Dans la formule, X représente une liaison -O- qui est impliquée dans la réticulation ou un radical OH, R₂ représente un radical alkyle ayant 20 atomes de carbone ou moins, n est un entier allant de 1 à 3, et au moins l'un des X est une liaison -O- qui est impliquée dans la réticulation. Dans le cas où n est 1 ou 2, les R₂ peut être un mélange de différents radicaux alkyle)

9. Ensemble membrane-électrode selon l'une des revendications 1 à 6, **caractérisé en ce que** ladite structure réticulée tridimensionnelle contient une structure représentée par la formule (5) ci-dessous. 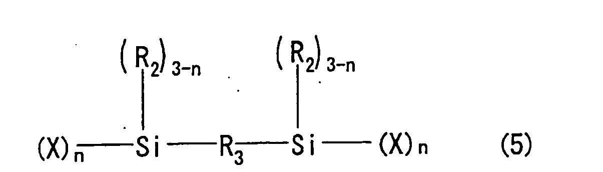 (Dans la formule, X représente une liaison -O- qui est impliquée dans la réticulation ou un radical OH, R₂ représente un radical alkyle ayant 4 atomes de carbone ou moins, R₃ représente un hydrocarbure ayant 30 atomes de carbone ou moins, n est un entier allant de 1 à 3, et au moins l'un des X est une liaison - O- qui est impliquée dans la réticulation.)

10. Ensemble membrane-électrode selon l'une des revendications 1 à 9, **caractérisé en ce que** ladite membrane conductrice de protons contient une structure qui est réticulée et tridimensionnelle grâce à des liaisons silicium-oxygène.

11. Procédé de préparation d'un ensemble membrane-électrode selon l'une des revendications 1, 2 et 4 à 10, **caractérisé en ce qu'**il comprend une première étape d'application d'un liquide contenant un monomère réticulable contenant du silicium sur au moins une face de la membrane conductrice de protons, une deuxième étape d'adhésion d'une électrode à diffusion gazeuse, présentant un catalyseur fixé sur celle-ci sur la membrane conductrice de protons sur laquelle le liquide a été appliqué, et une troisième étape de durcissement du liquide, ledit monomère réticulable se composant d'un composé représenté par la formule (6) ci-dessous. 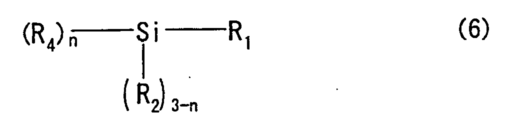 (Dans la formule, R₄ représente le radical CI, OCH₃, OC₂H₅, OC₆H₅, OH ou OCOCH₃, R₁ représente tout radical organique contenant un radical acide, R₂ représente un radical alkyle ayant 4 atomes de carbone ou moins, et n est un entier allant de 1 à 3.)

12. Procédé de préparation d'un ensemble membrane-électrode selon l'une des revendications 1 et 3 à 10, **caractérisé en ce qu'**il comprend une première étape d'application d'un liquide contenant un monomère réticulable contenant du silicium et de fines particules de carbone présentant un catalyseur à métal précieux fixé sur celles-ci sur au moins une face de la membrane conductrice de protons, une deuxième étape d'adhésion d'une électrode à diffusion gazeuse sur la membrane conductrice de protons sur laquelle le liquide a été appliqué, et une troisième étape de durcissement du liquide, ledit monomère réticulable se composant d'un composé représenté par la formule (6) ci-dessous. 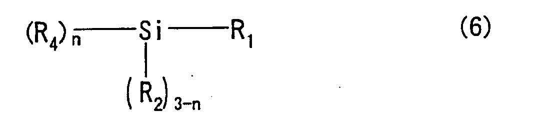 (Dans la formule, R₄ représente le radical CI, OCH₃, OC₂H₅, OC₆H₅, OH ou OCOCH₃, R₁ représente tout radical organique contenant un radical acide, R₂ représente un radical alkyle ayant 4 atomes de carbone ou moins, et n est un entier allant de 1 à 3.)

13. Procédé de préparation d'un ensemble membrane-électrode selon la revendication 11 ou 12, **caractérisé en ce que** R₁ dans la formule (6) contient un radical acide choisi parmi le radical acide sulfonique ou le radical acide phosphonique.

14. Procédé de préparation d'un ensemble membrane-électrode selon la revendication 13, **caractérisé en ce que** le composé de formule (6) est un composé représenté par la formule (7) ci-dessous. 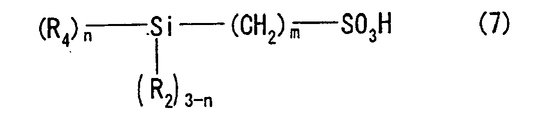 (Dans la formule, R₄ représente le radical CI, OCH₃, OC₂H₅, OC₆H₅, OH ou OCOCH₃, R₂ représente un radical alkyle ayant 4 atomes de carbone ou moins, m est un entier allant de 1 à 20, et n est un entier allant de 1 à 3.)

15. Procédé de préparation d'un ensemble membrane-électrode selon l'une des revendications 11 à 14, **caractérisé en ce que** ledit monomère réticulable se compose d'un composé représenté par la formule (8) ci-dessous.
Si(R₄)₄ (8)
(Dans la formule, R₄ représente le radical Cl, OCH₃, OC₂H₅, OC₆H₅, OH ou OCOCH₃.)

16. Procédé de préparation d'un ensemble membrane-électrode selon l'une des revendications 11 à 14, **caractérisé en ce que** ledit monomère réticulable se compose d'un composé représenté par la formule (9) ci-dessous.
Si (R4)ₙ (R₂)₄₋ₙ (9)
(Dans la formule, R₄ représente le radical Cl, OCH₃, OC₂H₅, OC₆H₅, OH ou OCOCH₃, R₂ représente un radical alkyle ayant 20 atomes de carbone ou moins, et n est un entier allant de 1 à 3. Dans le cas où n est 1 ou 2, les R₂ peuvent être un mélange de différents radicaux alkyle.)

17. Procédé de préparation d'un ensemble membrane-électrode selon l'une des revendications 11 à 14, **caractérisé en ce que** ledit monomère réticulable se compose d'un composé représenté par la formule (10) ci-dessous. 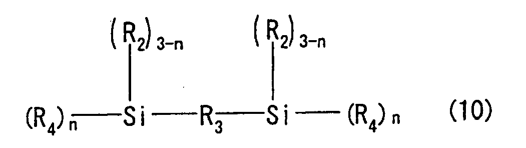 (Dans la formule, R₄ représente le radical Cl, OCH₃, OC₂H₅, OC₆H₅, OH ou OCOCH₃, R₂ représente un radical alkyle ayant 4 atomes de carbone ou moins, R₃ représente un hydrocarbure ayant 30 atomes de carbone ou moins, et n est un entier allant de 1 à 3.)

18. Procédé de préparation d'un ensemble membrane-électrode selon la revendication 12, **caractérisé en ce que** le liquide appliqué dans la première étape a une concentration en matières solides, à savoir la concentration totale en monomère réticulable contenant du silicium et en fines particules de carbone supportant le catalyseur à métal précieux, d'au moins 5% en poids.

19. Procédé de préparation d'un ensemble membrane-électrode selon l'une des revendications 11 à 18, **caractérisé en ce que** le liquide appliqué dans la première étape contient de l'eau.

20. Procédé de préparation d'un ensemble membrane-électrode selon l'une des revendications 11 à 19, **caractérisé en ce que** la deuxième étape est réalisée par pression à chaud, à une température d'au moins 20°C.

21. Procédé de préparation d'un ensemble membrane-électrode selon la revendication 20, **caractérisé en ce que** la pression à chaud est réalisée à une pression d'au moins 0,5 N/cm².

22. Procédé de préparation d'un ensemble membrane-électrode selon l'une des revendications 11 à 20, **caractérisé en ce que** la troisième étape est réalisée à une température allant de 50 à 300°C.

23. Procédé de préparation d'un ensemble membrane-électrode selon l'une des revendications 11 à 21, **caractérisé en ce que** la troisième étape comprend une étape de durcissement préliminaire, au cours de laquelle on réalise un préchauffage à température normale, suivie d'une étape de durcissement principale, au cours de laquelle on augmente la température de 20 à 200°C et ainsi, on réalise le durcissement.

24. Procédé de préparation d'un ensemble membrane-électrode selon l'une des revendications 11 à 23, **caractérisé en ce que** la troisième étape est réalisée dans des conditions d'humidification, avec une humidité relative d'au moins 50%.

25. Cellule combustible à électrolyte polymère, qui utilise un ensemble membrane-électrode selon l'une des revendications 1 à 10.
